# EUROPEAN PATENT APPLICATION

(11) **EP 4 779 965 A1**
(43) Date of publication of application: **22.07.2026**
(21) Application number: 23952324.4
(22) Date of filing: 11.10.2023
(51) Int. Cl.: H04N 7/18

(54) **INFORMATION PROCESSING DEVICE, PARAMETER DERIVATION METHOD, IMAGE PROCESSING DEVICE, AND PARAMETER SETTING METHOD**

(30) Priority: 13.09.2023 JP 2023148757
(71) Applicant: Sony Semiconductor Solutions Corporation, Atsugi-shi, Kanagawa 243-0014 (JP)
(72) Inventor: ABE, Hiroshi, Atsugi-shi, Kanagawa 243-0014 (JP); MASUURA, Takeshi, Atsugi-shi, Kanagawa 243-0014 (JP); AMAYA, Kenichiro, Atsugi-shi, Kanagawa 243-0014 (JP)
(74) Representative: Müller Hoffmann & Partner
(86) International application number: PCT/JP2023/036833
(87) International publication number: WO 2025/057436

(57) **Abstract**

An information processing apparatus according to the present technology includes an inverse processing section that estimates a pre-processing image on the basis of a processed image and motion detection information that are transmitted by an image processing apparatus including a motion detecting section that detects a motion of the image processing apparatus, and an image processing section that performs, on a processing-target image, image processing based on the motion detection information, the motion detection information being acquired by the motion detecting section, the processed image being the processing-target image after the image processing performed by the image processing section, the pre-processing image being the processing-target image before the image processing; and a parameter deriving section that derives a parameter that is to be set for the image processing section on the basis of a result of a trial of the image processing performed, using a candidate parameter, on the pre-processing image estimated by the inverse processing section.

## Description

### Technical Field

The present technology relates to an information processing apparatus, a parameter derivation method, an image processing apparatus, and a parameter setting method, and particularly relates to a technology for performing appropriate parameter adjustment for an image processing section that performs image processing based on motion detection information about an apparatus.

### Background Art

As an image processing technology, for example, a technology for processing target images on the basis of motion detection information acquired by a motion detecting section such as an IMU (Inertial Measurement Unit) is known. For example, representative examples thereof include image processing as an EIS (Electric Image Stabilizer; hereinafter, referred to as a "stabilization process") that removes vibration components due to camera shake or the like by an electronic process in an image-capturing apparatus.

Here, regarding image processing, it is conceivable to perform parameter adjustment such that images after the processing satisfy a predetermined criterion. For example, regarding the example of the stabilization process described above, in a case where there are a user who desires to remove vibration components as much as possible, a user who desires to tolerate a certain degree of vibration, and a user who desires to add vibration due to the insufficiency of vibration, parameters are adjusted such that image processing characteristicss corresponding to the user preferences are achieved, and so on.

Note that examples of related conventional technologies include Patent Literature 1 described below. Patent Literature 1 described below discloses a technology for deriving control parameters that are deemed to be appropriate on the basis of operation characteristics data acquired when an electric motor is operated using each one of a plurality of control parameters, as a technique for automatic adjustment of control parameters of the electric motor.

### Citation List

### Patent Literature

Patent Literature 1: JP-2016-19304-A

### Disclosure of Invention

### Technical Problem

In parameter adjustment, it is conceivable to perform trial image processing for parameter derivation using images that are to be actually used by an image processing apparatus that executes image processing for image processing, considering the actual use environment of the image processing apparatus.

In this case, an information processing apparatus that performs the parameter derivation acquires images that are to be actually used for the image processing, that is, pre-processing images before the image processing, from the image processing apparatus and performs the image processing on the acquired pre-processing images for obtaining evaluation images for the parameter derivation.

However, there can be a case where, due to some circumstances, the information processing apparatus is not able to acquire pre-processing images from the image processing apparatus. For example, in a case where the communication between the image processing apparatus and the information processing apparatus is performed using a predetermined wireless communication bandwidth, and the image processing apparatus externally transmits processed images which are images after the image processing using the wireless communication bandwidth, circumstances might arise in which pre-processing images are not able to be transmitted separately from the processed images due to insufficient bandwidth, and so on.

The present technology has been made in view of the circumstances described above, and an object thereof is to aim to enable appropriate parameter adjustment for image processing in an image processing apparatus even in a case where an information processing apparatus that performs parameter derivation is not able to acquire pre-processing images from the image processing apparatus.

### Solution to Problem

An information processing apparatus according to the present technology includes an inverse processing section that estimates a pre-processing image on the basis of a processed image and motion detection information that are transmitted by an image processing apparatus including a motion detecting section that detects a motion of the image processing apparatus, and an image processing section that performs, on a processing-target image, image processing based on the motion detection information, the motion detection information being acquired by the motion detecting section, the processed image being the processing-target image after the image processing performed by the image processing section, the pre-processing image being the processing-target image before the image processing; and a parameter deriving section that derives a parameter that is to be set for the image processing section on the basis of a result of a trial of the image processing performed, using a candidate parameter, on the pre-processing image estimated by the inverse processing section.

By adopting the technique in which the pre-processing image estimated from the processed image is used for parameter derivation as described above, it becomes unnecessary to cause the information processing apparatus to acquire the pre-processing image from the image processing apparatus in performing parameter derivation.

In addition, an image processing apparatus according to the present technology includes a motion detecting section that detects a motion of the image processing apparatus; an image processing section that performs, on a processing-target image, image processing based on motion detection information acquired by the motion detecting section; a transmission processing section that performs a process of transmitting, to an external apparatus, the motion detection information and a processed image that is the processing-target image after the image processing performed by the image processing section; and a setting processing section that performs a process of setting, for the image processing section, a parameter derived by the external apparatus on the basis of a result of a trial of the image processing performed, using a candidate parameter, on a pre-processing image that is the processing-target image before the image processing and that is estimated on the basis of the processed image and the motion detection information.

By performing the process of transmitting the processed image and the motion detection information to the external apparatus as described above, it becomes possible for an information processing apparatus as the external apparatus to adopt the technique in which the pre-processing image estimated from the processed image is used for parameter derivation, and it becomes unnecessary to cause the information processing apparatus to acquire the pre-processing image from the image processing apparatus in performing parameter derivation. In addition, the setting processing section described above makes it possible for the image processing apparatus to perform the image processing using the derived parameter.

### Brief Description of Drawings

[Fig. 1] Fig. 1 is a block diagram illustrating a configuration example of a parameter adjustment system as an embodiment according to the present technology.
[Fig. 2] Fig. 2 is a block diagram illustrating a configuration example of an image processing apparatus as the embodiment.
[Fig. 3] Fig. 3 is a block diagram illustrating a configuration example of an information processing apparatus as the embodiment.
[Fig. 4] Fig. 4 is a diagram for explaining an algorithm example of a stabilization process in the embodiment.
[Fig. 5] Fig. 5 illustrates an example of a grid point mesh projected from an imaginary celestial sphere onto the image plane of a captured image.
[Fig. 6] Fig. 6 is a diagram for explaining a segment matrix.
[Fig. 7] Fig. 7 illustrates the segment matrix and grid point mesh overlapping in the image plane.
[Fig. 8] Fig. 8 is a diagram for explaining a technique example for determining reference coordinates of a segment representative point.
[Fig. 9] Fig. 9 is a diagram for explaining an interpolation process performed during rendering of a stabilized image.
[Fig. 10] Fig. 10 is a block diagram illustrating a configuration example of a stabilization processing section included in an image processing apparatus as the embodiment.
[Fig. 11] Fig. 11 is a diagram for explaining functions that an image processing apparatus has for enabling a parameter adjustment technique as the embodiment.
[Fig. 12] Fig. 12 is a diagram for explaining functions that the information processing apparatus has for enabling the parameter adjustment technique as the embodiment.
[Fig. 13] Fig. 13 is a diagram for explaining a functional configuration example of an inverse stabilization processing section.
[Fig. 14] Fig. 14 illustrates an example of a GUI for accepting an instruction operation for image characteristics conditions.
[Fig. 15] Fig. 15 is a diagram for explaining the camera center (image-capturing center) and the image frame center.
[Fig. 16] Fig. 16 is a flowchart illustrating an example of a processing procedure performed by the information processing apparatus for enabling the parameter adjustment technique as the embodiment.
[Fig. 17] Fig. 17 is a flowchart illustrating details of a parameter derivation process illustrated in Fig. 16.

### Mode(s) for Carrying Out the Invention

Hereinbelow, an embodiment according to the present technology is explained in the following order with reference to the attached drawings.
<1. Parameter Adjustment System as Embodiment>
   [1-1. System Configuration Example]
   [1-2. Configuration Example of Image Processing Apparatus]
   [1-3. Configuration Example of Information Processing Apparatus]
   [1-4. About Stabilization Process]
<2. Parameter Adjustment Technique as Embodiment>
<3. Processing Procedure>
<4. Modification Example>
<5. Summary of Embodiment>
<6. Present Technology>

### <1. Parameter Adjustment System as Embodiment>

### [1-1. System Configuration Example]

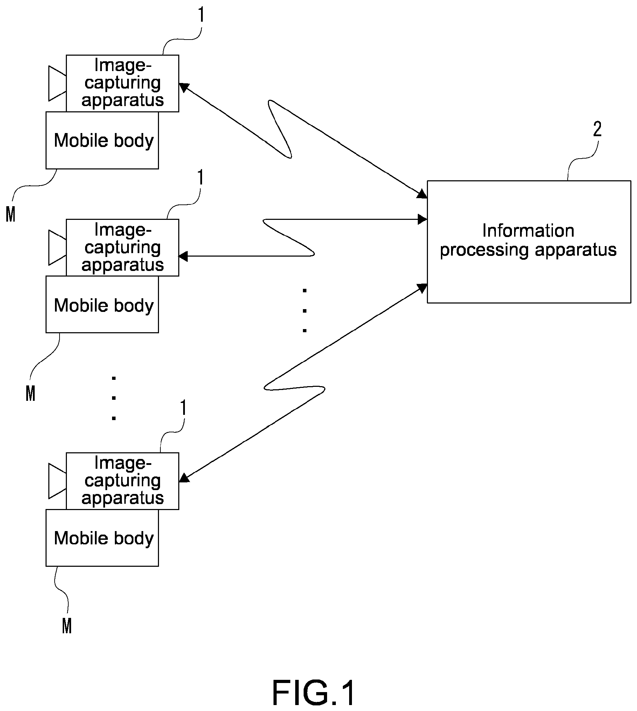

Fig. 1 is a block diagram illustrating a configuration example of a parameter adjustment system as an embodiment according to the present technology.

The parameter adjustment system includes at least image-capturing apparatuses 1 and an information processing apparatus 2.

Each image-capturing apparatus 1 is one embodiment of the image processing apparatus according to the present technology and includes a motion detecting section that detects motions of the image-capturing apparatus 1 and an image processing section that performs, on processing-target images, image processing based on motion detection information acquired by the motion detecting section. Although an illustration is omitted here, each image-capturing apparatus 1 includes an IMU (Inertial Measurement Unit) as the motion detecting section and performs image processing as an EIS (Electric Image Stabilizer) that removes vibration components by an electronic process as the image processing performed on captured images on the basis of the motion detection information acquired by the IMU.

Here, the process performed by the EIS is referred to as "stabilization process" in the present specification. Hereinbelow, for the purpose of explanation, a "stabilization process" is abbreviated as a "stabilization process" in some cases.

The information processing apparatus 2 is one embodiment of the information processing apparatus according to the present technology. For example, the information processing apparatus 2 is configured as a computer apparatus including a CPU (Central Processing Unit), a ROM (Read Only Memory), a RAM (Random Access Memory), and the like and performs a process of deriving parameters that are to be set for the image processing section in the image processing apparatus. Specifically, in the present example, a process of deriving parameters of the stabilization process in each image-capturing apparatus 1 is performed.

Here, in the present embodiment, the system is premised on dispatching, from each image-capturing apparatus 1 to an external apparatus, images captured with the image-capturing apparatus 1 attached to a mobile body M, specifically captured images after the stabilization process. Specifically, in the present example, the system is assumed to dispatch, from each image-capturing apparatus 1, onboard images in a motorcycle or car race as content images in broadcasting or streaming. In this case, each mobile body M is equivalent to a motorcycle or a car participating in the race, and typically there is a plurality of the mobile bodies M. At least one image-capturing apparatus 1 is attached to each mobile body M.

Each image-capturing apparatus 1 is capable of performing wireless data communication with an external apparatus.

Assuming application to a race scene like the one described above, there is a demand to customize the image characteristics of images after the stabilization process in accordance with user preferences and the like. Because of this, it is desired to adjust parameters of the stabilization process so as to achieve image characteristics as intended by users.

Regarding the parameter adjustment, it is conceivable that a user performs an operation of manually changing parameters as appropriate and performs a task of deriving parameters that achieve intended image characteristics through trial and error.

However, in that case, the user is required to be familiar with parameters of the stabilization process, and this imposes a burden on the user.

Because of this, the present embodiment adopts a technique in which parameter derivation is automated. Specifically, in the present example, the information processing apparatus 2 performs a parameter derivation process.

When parameter derivation is performed at the information processing apparatus 2, images that are to be actually used for the stabilization process, that is, captured images (hereinafter, referred to as "pre-processing images") before the stabilization process, are acquired from an image-capturing apparatus 1, and the stabilization process for obtaining evaluation images for parameter derivation is performed on the acquired pre-processing images.

At this time, regarding the pre-processing images, it is conceivable that images acquired during a run of a mobile body M are accumulated in an image-capturing apparatus 1 in advance, and the information processing apparatus 2 is caused to acquire the images from the image-capturing apparatus 1 after the run of the mobile body M has ended.

However, in application to a race, there are time constraints. For example, it is desired to complete parameter adjustment before the start of the second practice run using pre-processing images acquired during the first practice run, and so on. If the information processing apparatus 2 is caused to acquire pre-processing images from each image-capturing apparatus 1 after the run has ended as described above, parameter adjustment is not completed in time, undesirably.

In view of such circumstances, in application to a race, it is desired to transmit (wirelessly transmit) pre-processing images acquired during the first practice run to the side of the information processing apparatus 2 approximately in real time during the run. At this time, during the first practice run also, it is desired to acquire onboard images of each mobile body M as content images. Accordingly, images after the stabilization process are also to be dispatched from each image-capturing apparatus 1 along with pre-processing images.

However, in a communication system used for dispatching onboard images of a race, onboard images from a large number of image-capturing apparatuses 1 are dispatched using a shared wireless communication bandwidth. Accordingly, this results in a situation where the wireless communication bandwidth used for dispatching images is congested. Accordingly, it is very difficult to dispatch pre-processing images from each image-capturing apparatus 1 along with images after the stabilization process.

In view of the circumstances described above, an object of the present embodiment is to aim to enable appropriate parameter adjustment for image processing in an image-capturing apparatus 1 even in a case where the information processing apparatus 2 that performs parameter derivation is not able to acquire pre-processing images from the image-capturing apparatus 1.

### [1-2. Configuration Example of Image Processing Apparatus]

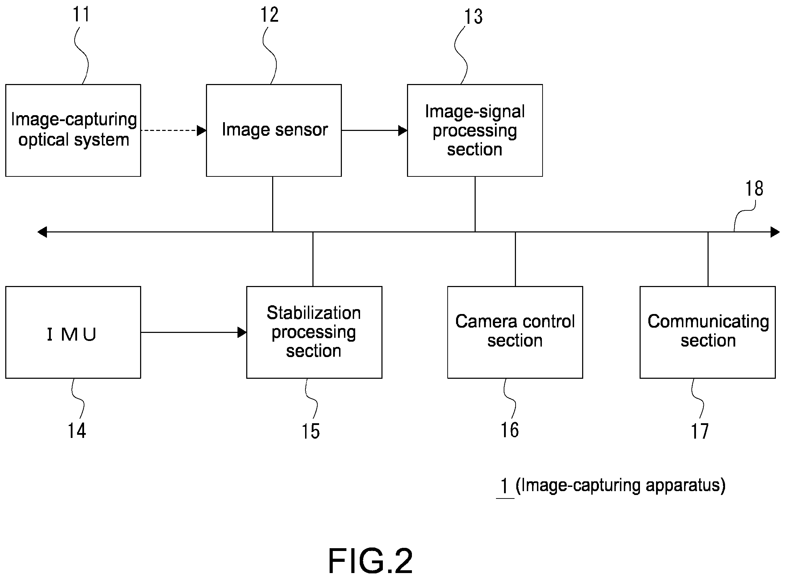

Fig. 2 is a block diagram illustrating a configuration example of an image-capturing apparatus 1.

As illustrated in the figure, the image-capturing apparatus 1 includes an image-capturing optical system 11, an image sensor 12, an image-signal processing section 13, an IMU 14, a stabilization processing section 15, a camera control section 16, and a communicating section 17. The image sensor 12, the image-signal processing section 13, the IMU 14, the stabilization processing section 15, the camera control section 16, and the communicating section 17 are connected via a bus 18, and are capable of performing mutual data communication.

The image-capturing optical system 11 includes lenses such as a cover lens, a zoom lens, and a focus lens and an aperture (iris) mechanism. The image-capturing optical system 11 introduceds light (incident light) from a subject and condenses the light onto the light reception surface of the image sensor 12.

For example, the image sensor 12 is configured as a solid-state image-capturing element such as a CCD (Charge Coupled Device)-type image-capturing element or a CMOS (Complementary Metal Oxide Semiconductor)-type image-capturing element. In the image sensor 12, pixels having photoelectric converting elements such as photodiodes are arrayed two-dimensionally, and each pixel performs photoelectric conversion of incident light from a subject to obtain a captured image as digital data.

The image-signal processing section 13 performs preprocessing, a synchronization process, a YC generation process, a resolution conversion process, and the like on the captured image obtained by the image sensor 12.

In the preprocessing, a clamp process of clamping the black levels of R (red), G (green), and B (blue) of the captured image to predetermined levels, correction processing among the R, G, and B color channels, and the like are performed. In the synchronization process, a color separation process is implemented such that all R, G, and B color components are included in image data of each pixel. For example, in a case where Bayer-array color filters are used, a demosaicing process is performed as the color separation process. In the YC generation process, a luminance (Y) signal and a color (C) signal are generated (separated) from R, G, and B image data. In the resolution conversion process, a resolution conversion process is executed on image data on which various types of signal processing have been implemented.

The IMU 14 functions as the motion detecting section that detects motions of the image-capturing apparatus 1.

The IMU 14 has an acceleration sensor and an angular velocity sensor. Specifically, in the present example, the acceleration sensor is configured as a triaxial acceleration sensor that can detect acceleration that is applied along each of the X axis, the Y axis, and the Z axis defining a three-dimensional space, and the angular velocity sensor is configured as a triaxial angular velocity sensor that can detect angular velocity relative to each of the X axis, the Y axis, and the Z axis.

Hereinbelow, motion detection information about the image-capturing apparatus 1 obtained by the IMU 14 is referred to as "IMU data." In the present example, the IMU data includes acceleration data about each of the X axis, the Y axis, and the Z axis and angular velocity data about each of the X axis, the Y axis, and the Z axis detected by the triaxial acceleration sensor and triaxial angular velocity sensor described above.

On the basis of the IMU data obtained by the IMU 14, the stabilization processing section 15 performs the stabilization process on images captured with the image sensor 12, specifically RGB images obtained via the image-signal processing section 13 in the present example.

In the present example, the stabilization process includes also a function for maintaining horizontal orientation along with a function for removing vibration components.

For example, the camera control section 16 includes a microcomputer having a CPU, a ROM, and a RAM. The CPU executes various types of process in accordance with a program stored on the ROM or a program loaded onto the RAM to perform overall control of the image-capturing apparatus 1.

For example, the camera control section 16 performs various types of operational control such as control related to starting and stopping an image-capturing operation performed by the image sensor 12, image signal processing performed by the image-signal processing section 13, and the stabilization process performed by the stabilization processing section 15.

In addition, the camera control section 16 performs various types of data communication with an external apparatus via the communicating section 17. The communicating section 17 in the present example is configured to be capable of performing data communication at least with the information processing apparatus 2. Specifically, the communicating section 17 is configured to be capable of performing wireless data communication with the information processing apparatus 2.

### [1-3. Configuration Example of Information Processing Apparatus]

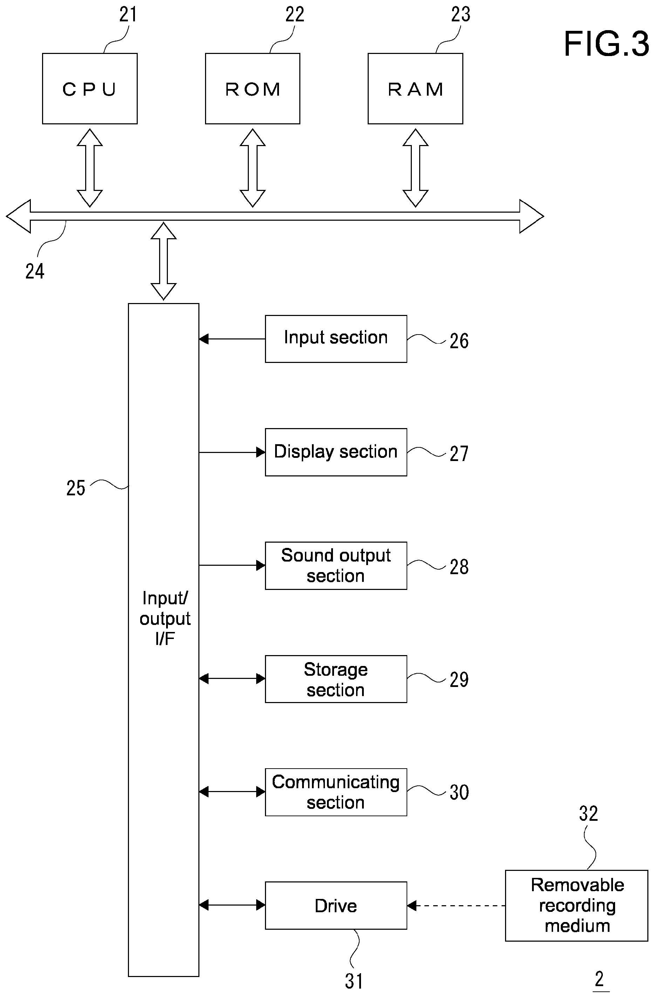

Fig. 3 is a block diagram illustrating a configuration example of the information processing apparatus 2.

As illustrated in the figure, the information processing apparatus 2 includes a CPU 21. The CPU 21 functions as an arithmetic operation processing section that performs various types of process and executes various types of process in accordance with a program stored on a ROM 22 or a program loaded onto a RAM 23 from a storage section 29. The RAM 23 also stores, as appropriate, data necessary for execution of various types of process by the CPU 21 or the like.

The CPU 21, the ROM 22, and the RAM 23 are interconnected via a bus 24.

In addition, the bus 24 is connected also to an input/output interface (I/F) 25.

The input/output interface 25 is connected to an input section 26 including an operation element and an operation device. For example, it is assumed that the input section 26 includes various types of operation element and operation device such as a keyboard, a mouse, keys, dials, a touch panel, a touch pad, and a remote controller.

An operation is sensed by the input section 26, and a signal according to the sensed operation is interpreted by the CPU 21.

In addition, the input/output interface 25 is connected to, as integrated bodies or separate bodies, a display section 27 including an LCD (Liquid Crystal Display), an organic EL (Electro-Luminescence) panel, or the like and a sound output section 28 including speakers or the like.

The display section 27 is used for display of various types of information and, for example, includes a display device provided to the housing of the information processing apparatus 2, a separate display device connected to the information processing apparatus 2, or the like.

The display section 27 displays various types of information on a display screen on the basis of an instruction from the CPU 21. For example, on the basis of an instruction from the CPU 21, the display section 27 performs display of various types of operation menu, icon, message, or the like, that is, performs display as a GUI (Graphical User Interface). In addition, on the basis of an instruction from the CPU 21, for example, the display section 27 performs also display or the like of an image designated through a user operation or the like.

The input/output interface 25 is connected to the storage section 29 including an HDD, a solid memory, and the like and a communicating section 30 including a modem and the like, in some cases.

The communicating section 30 performs a communication process via a transfer path such as the Internet or performs communication by wired/wireless communication, bus communication, or the like with various types of equipment. Particularly, the communicating section 30 in the present embodiment is configured to be capable of performing data communication with image-capturing apparatuses 1 (communicating sections 17).

The input/output interface 25 is connected also with a drive 31 as necessary. A removable recording medium 32 such as a magnetic disk, an optical disc, a magneto-optical disc, or a semiconductor memory is attached to the drive 31 as appropriate.

The drive 31 is capable of reading out, from the removable recording medium 32, a data file of a program or the like used for each process or the like. The data file having been read out is stored on the storage section 29, or images and sound included in the data file are output at the display section 27 and the sound output section 28. In addition, a computer program or the like read out from the removable recording medium 32 is installed on the storage section 29 as necessary.

In the information processing apparatus 2 having hardware configuration like the one described above, for example, software for processes of the present embodiment can be installed via network communication performed by the communicating section 30 or the removable recording medium 32. Alternatively, the software may be stored on the ROM 22, the storage section 29, or the like in advance.

Note that the information processing apparatus 2 is not necessarily configured singly as a computer apparatus like the one illustrated in Fig. 3 and may be configured by systemization of a plurality of computer apparatuses. The plurality of computer apparatuses may be systemized using a LAN (Local Area Network) or the like or may be remotely disposed using a VPN (Virtual Private Network) or the like using the Internet or the like. The plurality of computer apparatuses may include computer apparatuses as a server group (cloud) that can be used by cloud computing services.

### [1-4. About Stabilization Process]

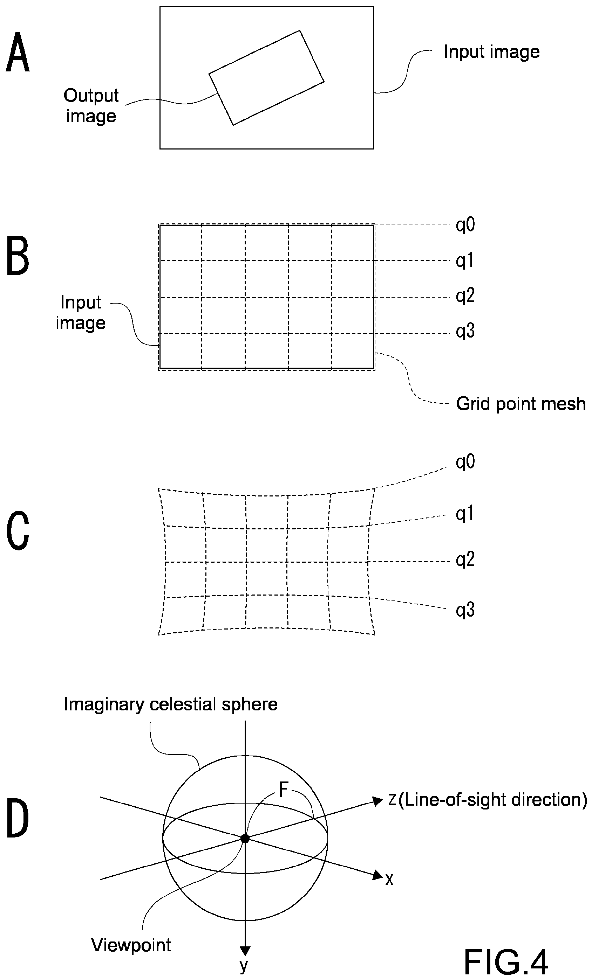

An algorithm example of the stabilization process in the embodiment is explained with reference to Fig. 4 to Fig. 9.

In the present technology, a specific algorithm of the stabilization process is not particularly limited, but various known algorithms can be adopted. Here, for clarity, an example of the algorithm is explained.

Basically, the stabilization process as an EIS can be grasped as a process of cropping an output image from an input image as illustrated in A in Fig. 4, and a process for identifying, for each pixel in the output image, which position in the input image is to be referenced for its value is performed.

B in Fig. 4 is a diagram for explaining a grid point mesh used in the stabilization process.

The grid point mesh has an outer frame with the same shape and size as the image frame of the input image. As illustrated in the figure, a plurality of division lines is defined in each of the up-down direction (vertical direction) and the left-right direction (horizontal line direction) in the outer frame. These division lines form a plurality of cells (5 × 4 = 20 cells in the example illustrated in the figure). Each cell within the grid point mesh is called "grid cell," and the vertices of each grid cell are called "grid points."

In the stabilization process, motion detection information acquired by the IMU 14 is associated with such a grid point mesh. In the stabilization process in the present example, quaternion (quaternion; quaternion) data is used as the motion detection information acquired by the IMU 14. The quaternion data represents rotation in a three-dimensional space and can be calculated on the basis of acceleration data and angular velocity data about each of the X axis, the Y axis, and the Z axis detected by the triaxial acceleration sensor and triaxial angular velocity sensor described before.

Basically, in the stabilization process, reference coordinates of each pixel in the output image are determined such that the rotation (the motion of an image-capturing apparatus 1) represented by such quaternion data is canceled.

Although it is conceivable that one piece of quaternion data obtained at any timing during the exposure period such as the start of exposure or the midpoint timing of the exposure period of a target image of the stabilization process is associated with the grid point mesh, in the present example, pieces of quaternion data obtained at a plurality of timings during the exposure period of the target image are associated with the grid point mesh in order to aim to reduce rolling shutter distortion. Specifically, in the present example, quaternion data based on IMU data detected at a corresponding timing is associated with each set of horizontal lines (five horizontal lines in the present example) of grid points in the grid point mesh (see quaternion data q0 to q4 in the figure).

Thereby, compared with a case where one piece of motion detection information is used for each processing-target image, the resolution in the time direction of the stabilization process can be enhanced, and it is possible to aim to reduce rolling shutter distortion.

In the stabilization process in the present example, the grid point mesh is deformed on the basis of lens distortion correction data as illustrated in C in Fig. 4 in order to correct lens distortion in the image-capturing optical system 11.

Furthermore, in the stabilization process in the present example, projective transformation of the grid point mesh after the deformation onto an imaginary celestial sphere like the one illustrated in D in Fig. 4 is performed. As illustrated in the figure, the imaginary celestial sphere is defined as a sphere centered on the viewpoint of the image-capturing apparatus 1 and having a radius which is equal to a focal length F.

In the stabilization process in the present example, projective transformation of the grid point mesh onto such an imaginary celestial sphere is performed, and then each grid point within the grid point mesh is rotated (three-dimensionally rotated) on the imaginary celestial sphere on the basis of the quaternion data. This rotation contributes to removal of vibration components.

After performing the rotation described above, the grid point mesh on the imaginary celestial sphere is projected onto the image plane of the captured image (i.e. transformation from three-dimensional information into two-dimensional information).

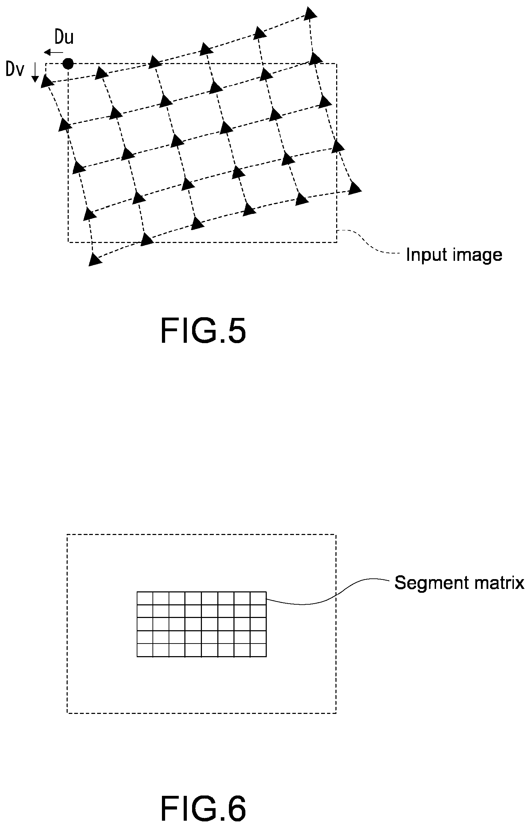

Fig. 5 illustrates an example of the grid point mesh projected from the imaginary celestial sphere onto the image plane of the captured image. In the figure, each grid point within the grid point mesh after the projection is represented by a ▲ mark.

By projecting the grid point mesh onto the image plane of the captured image in this manner, the coordinates of each grid point in the image plane are identified.

In the image plane, which is the projection destination, coordinate information about the input image has been defined. In addition, as explained regarding B in Fig. 4 described earlier, the grid point mesh is originally defined to have the same size and shape as the input image. Because of this, by performing the projection described above, the moving amount and moving direction of each grid point from the original position can be determined. In the figure, a difference vector Du and a difference vector Dv representing the moving amount and moving direction, from the original position, of the top-left grid point within the grid point mesh after the projection are illustrated as an example.

Here, when projection like the one described above is performed, it is possible to adjust the curvature of the output image (so-called free curvature perspective projection) by shifting the viewpoint position at the time of the projection.

In the stabilization process in the present example, a process of determining reference coordinates of each pixel in the output image is performed on the basis of coordinate information regarding coordinates of each grid point in the image plane, each grid point being identified by performing projection like the one described above.

Fig. 6 is a diagram for explaining a segment matrix.

Regarding the output image also, similarly to the case of the grid point mesh, instead of defining a cell for each pixel, a technique in which a cell including a plurality of pixels, that is, a segment, is defined, and reference coordinates are determined for each segment first is adopted.

It is assumed in the present example that, for example, the image size of the input image is a 4k size, and, for example, the image size of the output image, that is, the overall size of the segment matrix, is an FHD (Full High Definition) size.

The number of segments of the segment matrix may be set to any number, and it is assumed as an example for the purpose of explanation here that the number of segments of the segment matrix is 8×5 = 40.

Here, the center coordinates of the segment matrix coincide with the center coordinates of the input image defined in the image plane onto which the grid point mesh has been projected.

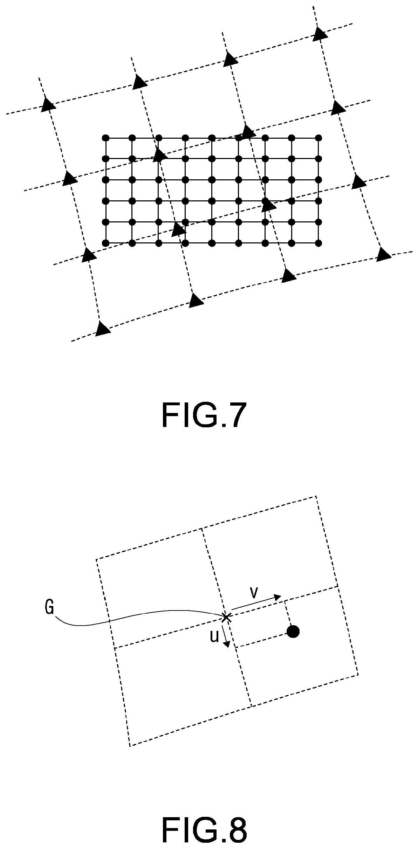

Fig. 7 illustrates the segment matrix and grid point mesh overlapping in the image plane. In the figure, a representative point (hereinafter, referred to as "segment representative point") of each segment in the segment matrix is represented by a • mark. As illustrated in the figure, it is assumed in the present example that each segment representative point is the upper-left vertex of the segment.

In order to determine reference coordinates of each segment, first, it is determined in which grid cell within the grid point mesh the segment representative point is present. This determination process is called a segment search process.

Through the segment search process, it is determined to which grid cell within the grid point mesh each segment representative point in the segment matrix belongs.

It should be noted here that, on the side of the grid point mesh, coordinate information is associated only at the level of individual grid points. Depending on the projection of the grid point mesh explained with reference to Fig. 5, the positional relationship between each grid point of each grid cell and a segment representative point can be identified, but this does not necessarily mean that coordinates (reference coordinates) in the input image corresponding to the segment representative point can be identified.

Accordingly, reference coordinates of each segment representative point are determined on the basis of the difference vectors Du and Dv of a grid point (information representing the moving amount and moving direction from the original position).

Fig. 8 is a diagram for explaining a technique example for determining reference coordinates of a segment representative point for which a grid cell to which it belongs has been identified through the segment search process.

In the figure, the segment representative point in the grid cell is represented by a • mark.

First, an interpolation ratio for determining reference coordinates of the target segment representative point is computed from the positional relationship with a center of mass G of the grid cell identified through the segment search. For example, as illustrated in the figure, the interpolation ratio is determined as a set of a vertical offset amount v and a horizontal offset amount u from the center of mass G.

Then, using this interpolation ratio, the difference vectors Du and Dv of the grid point (e.g. the upper-left grid point) in the grid cell to which the target segment representative point belongs are interpolated. Difference vectors obtained through this interpolation are referred to as "interpolated difference vectors."

The interpolated difference vectors function as information representing the moving amount and moving direction from the coordinates of the target segment representative point to reference coordinates relative to the coordinates.

Accordingly, once the interpolated difference vectors of the segment representative point are determined, reference coordinates of the segment representative point can be determined using the interpolated difference vectors. Specifically, the reference coordinates of the segment representative point can be determined as coordinates that are offset from the coordinates of the segment representative point in accordance with the moving direction and the moving amount represented by the interpolated difference vectors.

The process in which interpolated difference vectors of a segment representative point based on an interpolation ratio are calculated, and reference coordinates of the segment representative point are determined on the basis of the interpolated difference vectors as described above is called a remesh data generation process.

By performing the remesh data generation process described above on each segment representative point, reference coordinates of the four vertices of each segment in the segment matrix are determined.

In rendering of a stabilized image, first, using the reference coordinates of at least three points in the thus-determined reference coordinates of the four vertices of the segment, reference coordinates of each pixel (i.e. each output pixel) in the segment are determined through linear interpolation.

Once reference coordinates of each output pixel are determined, the value of the output pixel can be determined using the value of a pixel (hereinafter, referred to as "reference pixel Pr") represented by the reference coordinates in the input image.

In the present example, the value of each output pixel is determined through a two-dimensional interpolation process using the pixel values of a plurality of pixels near the reference coordinates in the input image.

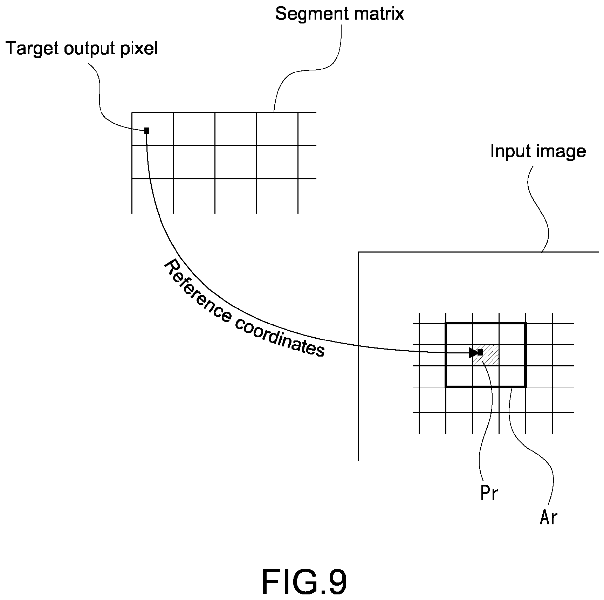

Fig. 9 is a diagram for explaining this interpolation process.

The figure schematically illustrates a state where the reference pixel Pr in the input image is identified from reference coordinates of a target output pixel of a rendering process (the target output pixel in the figure) in the segment matrix.

In the present example, the value of the output pixel is determined through an interpolation process using the pixel values in a reference area Ar including the reference pixel Pr and its surrounding pixels. The reference area Ar is an area centered on the reference pixel Pr and including m pixels × m pixels (m is a natural number which is equal to or greater than three). Note that whereas it is assumed in the figure that the reference area Ar is an area centered on the reference pixel Pr and including three pixels × three pixels = nine pixels, this is an example for the purpose of explanation, and the size of the reference area Ar is not limited to this.

As the interpolation process in this case, for example, it is conceivable to perform a process using a Lanczos (Lanczos-2) filter. Specifically, it is conceivable to use a Lanczos filter or a hybrid filter obtained by blending a Gaussian filter from the standpoint of aliasing prevention. This hybrid filter is effective for interpolation in the RAW format in which the image format includes arrays of RGGB or the like and is particularly effective for aliasing prevention in high-frequency bands.

In the stabilization process in the present example, a stabilized image as an image after the stabilization process is obtained by performing an interpolation process like the one described above on each output pixel.

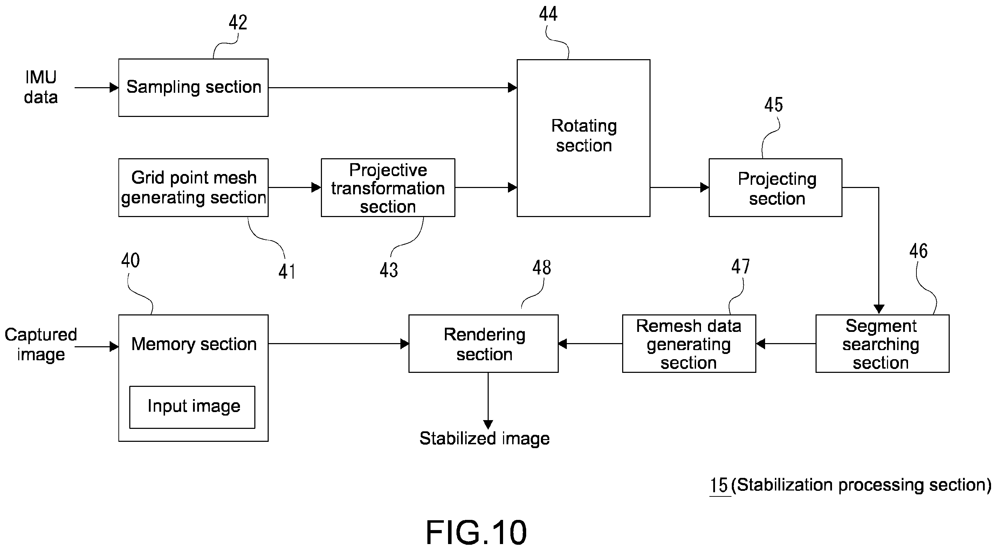

Fig. 10 is a block diagram illustrating a configuration example of the stabilization processing section 15 that enables a stabilization process like the one described above.

As illustrated in the figure, the stabilization processing section 15 has a memory section 40, a grid point mesh generating section 41, a sampling section 42, a projective transformation section 43, a rotating section 44, a projecting section 45, a segment searching section 46, a remesh data generating section 47, and a rendering section 48.

A captured image is input to the memory section 40, and the captured image is temporarily retained as an input image therein.

The grid point mesh generating section 41 generates the grid point mesh described before. In the present example, in order to perform lens distortion correction, the grid point mesh generating section 41 generates the grid point mesh (see C in Fig. 4) deformed on the basis of the lens distortion correction data.

IMU data from the IMU 14 is input to the sampling section 42. The sampling section 42 samples the input IMU data such that motion detection information acquired at a corresponding timing is associated with each grid cell row as explained with reference to B in Fig. 4 described earlier.

In addition, the sampling section 42 in the present example generates quaternion data on the basis of the sampled IMU data.

The projective transformation section 43 performs projective transformation of the grid point mesh generated by the grid point mesh generating section 41 onto the imaginary celestial sphere (see D in Fig. 4) described before.

The rotating section 44 rotates each grid point within the grid point mesh obtained by projective transformation onto the imaginary celestial sphere by the projective transformation section 43 on the basis of the motion detection information (the quaternion data in the present example) of each grid cell row input from the sampling section 42.

The projecting section 45 performs a process of projecting the grid point mesh on which the rotation process by the rotating section 44 has been implemented onto the image plane of the captured image (see Fig. 5).

The segment searching section 46 performs the segment search process explained earlier on the basis of coordinate information about each grid point within the grid point mesh identified through the projection by the projecting section 45. Through this segment search process, it is identified to which grid cell within the grid point mesh each segment representative point in the segment matrix belongs.

On the basis of a result of the segment search process performed by the segment searching section 46, the remesh data generating section 47 performs the remesh data generation process described before, that is, a process of calculating interpolated difference vectors based on an interpolation ratio (see u and v in Fig. 8) of each segment representative point, and reference coordinates of the segment representative point are determined on the basis of the interpolated difference vectors.

The rendering section 48 performs a process of rendering a stabilized image on the basis of remesh data (the reference coordinates of each segment representative point) obtained by the remesh data generating section 47 and the input image retained in the memory section 40. Specifically, for each output pixel, reference coordinates are determined on the basis of the remesh data, and the value of the output pixel is determined on the basis of the value of the reference pixel Pr in the input image identified by the reference coordinates. Specifically, in the present example, the value of the output pixel is determined by an interpolation process using the value of each pixel in the reference area Ar like the one explained with reference to Fig. 9.

### <2. Parameter Adjustment Technique as Embodiment>

Here, as described earlier, an object of the present embodiment is to make it possible for the information processing apparatus 2 to appropriately perform parameter derivation and aim to enable appropriate parameter adjustment on the premise that the information processing apparatus 2 is not able to acquire pre-processing images from an image-capturing apparatus 1.

In order to achieve the object, in the present embodiment, each of an image-capturing apparatus 1 and the information processing apparatus 2 performs a process like the one below.

That is, the image-capturing apparatus 1 transmits, to the information processing apparatus 2, processed images acquired by the stabilization processing section 15 and motion detection information acquired by the IMU 14. On the basis of the processed images and the motion detection information transmitted by the image-capturing apparatus 1, the information processing apparatus 2 estimates pre-processing images and derives parameters that are to be set for the stabilization processing section 15, on the basis of a result of a trial of image processing performed on the estimated pre-processing images using candidate parameters.

By adopting the technique in which pre-processing images estimated from processed images are used for parameter derivation as described above, it becomes unnecessary to cause the information processing apparatus 2 to acquire pre-processing images from the image-capturing apparatus 1 in performing parameter derivation.

Accordingly, it becomes possible for the information processing apparatus 2 to appropriately perform parameter derivation, and it is possible to aim to enable appropriate parameter adjustment for image processing in the image-capturing apparatus 1 even in a case where the information processing apparatus 2 that performs parameter derivation is not able to acquire pre-processing images from the image-capturing apparatus 1.

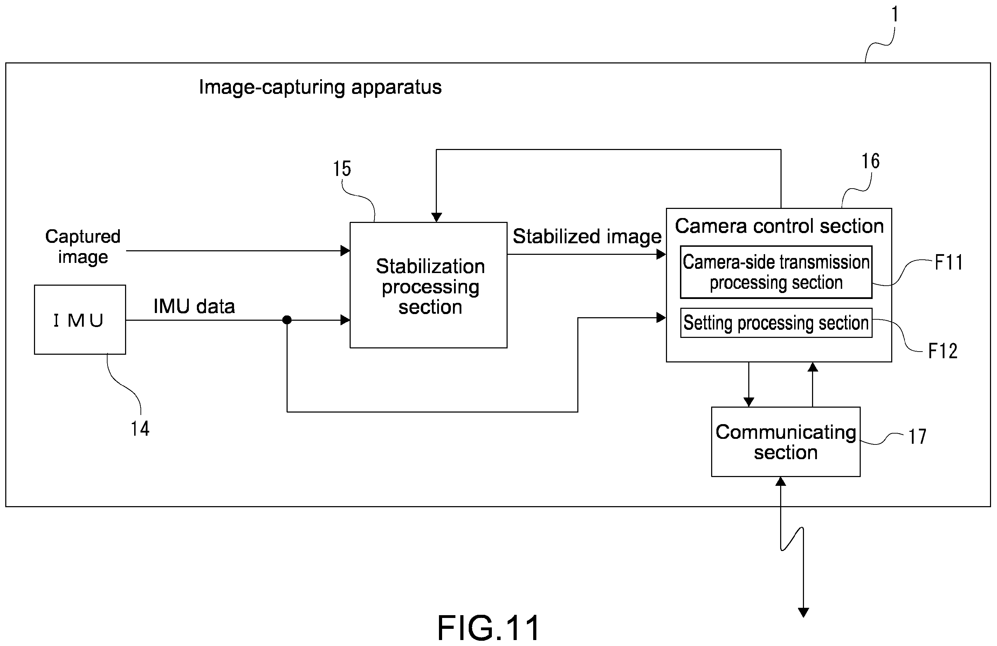

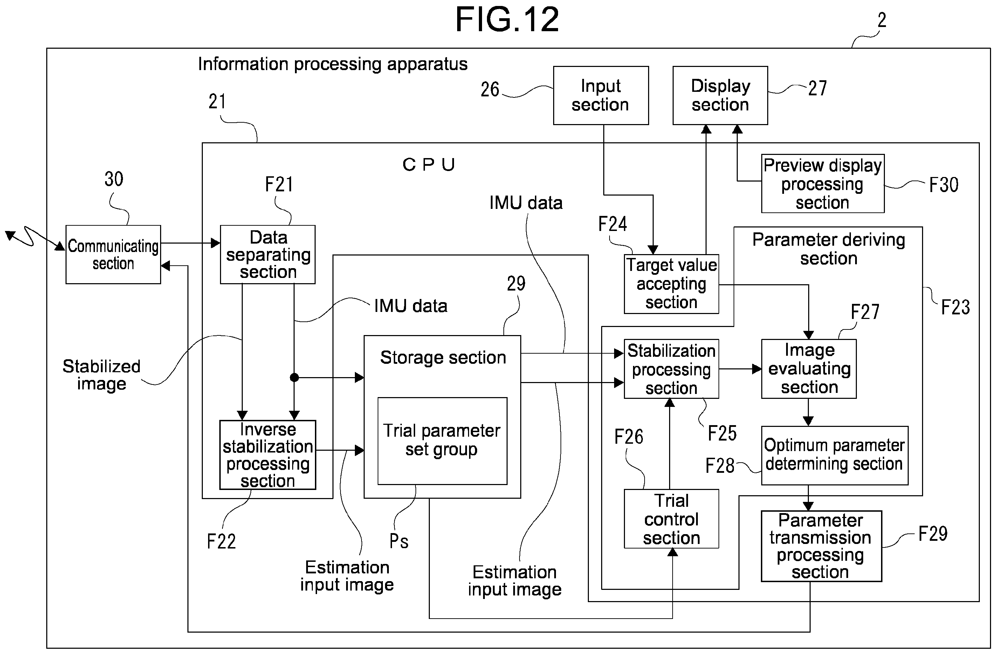

A specific example of a parameter adjustment technique as the embodiment is explained with reference to Fig. 11 and Fig. 12.

Note that portions in the following explanation that are similar to portions that have already been explained are given identical reference characters, and explanation thereof is omitted.

Fig. 11 is a diagram for explaining functions that an image-capturing apparatus 1 has for enabling the parameter adjustment technique as the embodiment.

As illustrated in Fig. 11, the camera control section 16 in the image-capturing apparatus 1 functions as a camera-side transmission processing section F11 and a setting processing section F12.

The camera-side transmission processing section F11 performs a process of transmitting, to an external apparatus, processed images which are images after image processing performed by the image processing section and motion detection information. Specifically, the camera-side transmission processing section F11 in the present example performs a process of transmitting, to the information processing apparatus 2 via the communicating section 17, stabilized images obtained by the stabilization processing section 15 and IMU data obtained by the IMU 14.

Here, as described before, since the present example is premised on the assumption that parameter adjustment is ended before the second practice run, the transmission of stabilized images and IMU data like the one described above is performed during the first practice run.

In addition, the present example is premised on the assumption that, as evaluation of stabilized images by a trial of the stabilization process in parameter derivation, evaluation using images corresponding to a plurality of frames is performed, and pieces of data corresponding to a plurality of frames is transmitted by the transmission of stabilized images and IMU data performed by the camera-side transmission processing section F11. For example, it is conceivable to continuously perform the transmission of stabilized images and IMU data over a duration equivalent to approximately one lap of a course, and so on.

Note that the setting processing section F12 is explained later on.

Fig. 12 is a diagram for explaining functions that the information processing apparatus 2 has for enabling the parameter adjustment technique as the embodiment.

In the information processing apparatus 2, the CPU 21 functions as a data separating section F21, an inverse stabilization processing section F22, a parameter deriving section F23, a target value accepting section F24, a parameter transmission processing section F29, and a preview display processing section F30.

Communication data including stabilized images and IMU data transmitted by the camera-side transmission processing section F11 described above is received by the communicating section 30.

The data separating section F21 performs a process of separating the stabilized images and the IMU data from the thus-received communication data.

The inverse stabilization processing section F22 performs a process of estimating pre-stabilization images as pre-processing images on the basis of the stabilized images and the IMU data obtained by the data separating section F21.

The inverse stabilization process of estimating the pre-stabilization images from the stabilized images can basically be achieved by performing coordinate transformation of each pixel in the stabilized images in image planes on the basis of interpolated difference vectors described before determined from the IMU data. The image planes described here are image planes in a coordinate system which is the same as that of images input to the stabilization processing section 15.

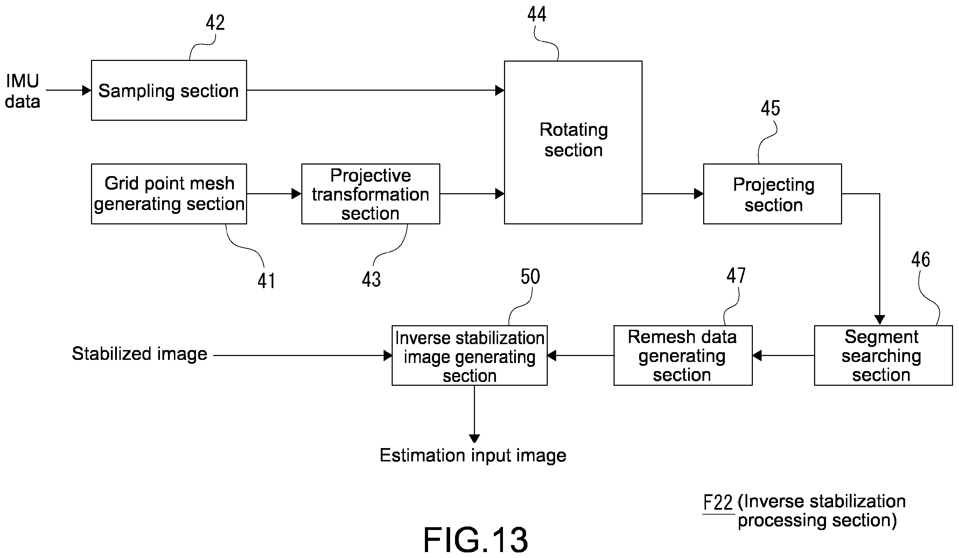

Fig. 13 is a diagram for explaining a functional configuration example of the inverse stabilization processing section F22.

As illustrated in the figure, the functional configuration is similar to that of the stabilization processing section 15 in that the inverse stabilization processing section F22 has the grid point mesh generating section 41, the sampling section 42, the rotating section 44, the projecting section 45, the segment searching section 46, and the remesh data generating section 47. The inverse stabilization processing section F22 has an inverse stabilization image generating section 50 instead of the rendering section 48.

In this case, as remesh data, the remesh data generating section 47 generates data representing interpolated difference vectors of each segment representative point instead of data representing reference coordinates of each segment representative point.

As described above, the inverse stabilization image generating section 50 inputs remesh data representing interpolated difference vectors of each segment representative point and determines difference vectors of each pixel (i.e. each output pixel) in each segment by linear interpolation using reference coordinates of at least three vertices. Thereby, difference vectors of each pixel (each output pixel) in a stabilized image are determined.

After determining difference vectors of each pixel in the stabilized image in this manner, for each pixel in the stabilized image, the inverse stabilization image generating section 50 performs coordinate transformation in an image plane on the basis of the determined difference vectors.

In an image obtained through this coordinate transformation, some pixels are missing (i.e. pixels not having pixel values arise) in some cases due to lens distortion correction performed in the stabilization process or for some other reason. For missing pixels that have arisen due to the coordinate transformation described above, the inverse stabilization image generating section 50 performs a pixel-value interpolation process using the pixel values of surrounding pixels.

Through an inverse stabilization process like the one described above, coordinate transformation in the image plane of a stabilized image is performed to cancel effects of the stabilization process performed by the stabilization processing section 15; as a result, a pre-stabilization image is estimated.

Here, in the inverse stabilization process, an image with the same size (a 4k size in the present example) as the image frame size of an input image is generated as the pre-stabilization image. At this time, for example, a predetermined pixel value such as 0 is allocated to pixels in the surrounding area other than an image area to which pixel values are allocated by the coordinate transformation and the interpolation process in the inverse stabilization process.

The pre-stabilization image obtained through the inverse stabilization processing section F22 is referred to as "estimation input image" hereinbelow.

The estimation input image obtained by the inverse stabilization processing section F22 is stored on the storage section 29 so as to be used for a trial of the stabilization process performed for parameter derivation.

In addition, the IMU data separated by the data separating section F21 described before also is stored on the storage section 29 so as to be used for a trial of the stabilization process performed for parameter derivation.

On the basis of a result of a trial of the stabilization process performed, using candidate parameters, on the estimation input image (pre-processing image) estimated by the inverse stabilization processing section F22, the parameter deriving section F23 derives parameters that are to be set for the stabilization processing section 15.

In the present example, the parameter deriving section F23 derives parameters that satisfy image characteristics conditions for a stabilized image according to an instruction given through a user operation.

Then, for this purpose, the CPU 21 in the present example functions as the target value accepting section F24 that causes the display section 27 to display a GUI for performing an instruction operation for image characteristics conditions and accepts the instruction operation for image characteristics conditions.

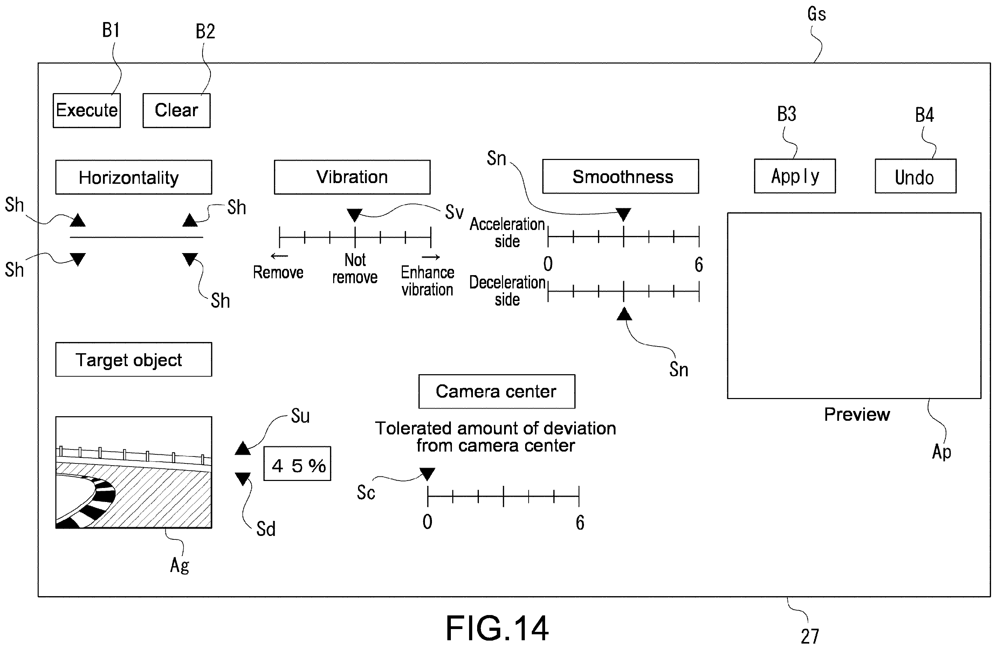

Fig. 14 illustrates an example of an acceptance screen Gs for accepting an instruction operation for image characteristics conditions.

In the present example, five items, namely, horizontality, vibration, smoothness, target object, and camera center, are defined as image characteristics conditions of stabilized images for which a user can give an instruction in parameter derivation.

Horizontality means the degree of angular difference between the horizontal direction of a space captured in an image and the horizontal line direction of the image.

In the stabilization process, horizontality can change due to the gravitational acceleration that is applied to an image-capturing apparatus 1 or the like. Particularly, in application to a race scene, the gravitational acceleration that is applied to the image-capturing apparatus 1 tends to increase, and the influence on horizontality increases.

Regarding horizontality, even when horizontal orientation is appropriately achieved from the standpoint of a process, horizontal orientation is perceived as not being achieved due to optical illusion effects from the standpoint of visual appearance of a stabilized image in some cases. From such a perspective also, it is effective to make it possible to give an instruction for horizontality as an image characteristics condition in parameter derivation.

Vibration is an example of image characteristics conditions related to image vibration and specifically means the degree of vibration removal and the degree of vibration enhancement.

Vibration enhancement can achieve an effect of increasing the sense of presence. Regarding an instruction for vibration enhancement, it is made possible to give an instruction for a vibration enhancement level from an unremoved (no removal) state.

Smoothness is an example of image characteristics conditions related to image vibration and is an image characteristics condition related to responsiveness to motions (motions of the image-capturing apparatus 1). The lower the responsiveness to motions is (i.e. the higher the stabilization effect is), the more enhanced the smoothness of a stabilized image is. For clarity, it should be noted that the maximum smoothness means that an output image does not move, and accordingly this is equivalent to a state where the stabilization effect is maximized.

In the present example, regarding smoothness, it is made possible to give an instruction for responsiveness on both the acceleration side and the deceleration side of motions.

Target object is an image characteristics condition related to the size of the area occupied by a target subject within an image, and specifically, in the present example, it is made possible to give an instruction for the proportion of the size of the area occupied by the target subject within the image. For example, it is conceivable to give an instruction for the proportion of the size of the area occupied by a road, the sky, or the like captured in an image, and so on.

Camera center is an image characteristics condition related to the deviation caused between the camera center (image-capturing center) and the image frame center.

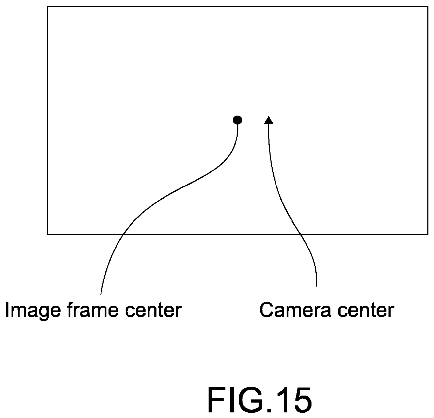

The image-capturing center (camera center) is an estimated optical axis center of the image-capturing apparatus 1 in a case where vibration due to camera shake has not occurred. In a stabilized image, a deviation caused between the image-capturing center and the image frame center arises in some cases due to the influence of gravitational acceleration that is applied to an image-capturing apparatus 1 or the like (see Fig. 15).

In the present example, as the image characteristics condition of camera center, it is made possible to give an instruction for a tolerated amount of deviation of the image frame center from the camera center.

As illustrated in Fig. 14, on the acceptance screen Gs in the present example, various types of operation element for performing an instruction operation for individual items, horizontality, vibration, smoothness, target object, and camera center, are displayed.

Specifically, regarding horizontality, four operation elements Sh for adjusting the inclination of a bar simulating the horizontal line are displayed as illustrated in the figure. Specifically, two operation elements Sh for adjusting the height of the left end of the horizontal line bar and two operation elements Sh for adjusting the height of the right end of the bar are displayed, and the user can use these four operation elements Sh to designate the degree of inclination of the horizontal line bar. The designation operation of the inclination of the bar is the horizontality designation operation.

In addition, regarding vibration, an operation element Sv that can give an instruction for a vibration removal level or a vibration enhancement level is displayed, and the user can give an instruction for a vibration removal level or a vibration enhancement level using the operation element Sv.

Regarding smoothness, as operation elements Sn for giving an instruction for responsiveness to motions, an operation element Sn for giving an instruction for responsiveness on the acceleration side and an operation element Sn for giving an instruction for responsiveness on the deceleration side are displayed. The user can use these operation elements Sn to give an instruction for responsiveness on each of the acceleration side and the deceleration side.

Regarding target object, a designation image display area Ag that displays an image for designating a target subject from various types of subject captured in an image is provided, and an operation element Su and an operation element Sd for giving an instruction for the proportion of the size of the area occupied by the designated target subject within the image are displayed.

In the designation image display area Ag, the image for designating a target subject is displayed by the target value accepting section F24. The target value accepting section F24 performs a subject classification process such as a semantic segmentation process on an estimation input image used for a trial of the stabilization process performed for parameter derivation by the parameter deriving section F23, superimposes, on the image, visual information representing the area of each subject present in the image, and causes the designation image display area Ag to display the visual information. The user can designate a target subject by performing an area designation operation such as, for example, a click operation or a touch operation on such a display image in the designation image display area Ag.

The operation element Su and the operation element Sd are operation elements for giving an instruction for increasing and reducing the value of the proportion of the size of an area, respectively. The user can use the operation element Su and/or the operation element Sd to give an instruction for the proportion of the size of the area occupied by a target subject within the image.

Regarding camera center, an operation element Sc for giving an instruction for a tolerated amount of deviation from the camera center is displayed. The user can use this operation element Sc to give an instruction for a tolerated amount of deviation from the camera center.

The acceptance screen Gs is provided with an execute button B1 and a clear button B2.

The execute button B1 is a button for giving an instruction for execution of the parameter derivation process by the parameter deriving section F23, and the clear button B2 is a button for giving an instruction for clearing of instruction values of the individual items of the image characteristics conditions.

In response to an operation of the execute button B1, the CPU 21 executes the parameter derivation process using, as target values, values of the individual items, horizontality, vibration, smoothness, target object, and camera center, for which instructions have been given by user operations on the acceptance screen Gs.

As illustrated in Fig. 12, the storage section 29 of the information processing apparatus 2 has stored thereon a trial parameter set group Ps.

The trial parameter set group Ps includes candidate parameter sets that are used for a trial of the stabilization process in the parameter derivation process performed by the parameter deriving section F23. A plurality of the candidate parameter sets is prepared and stored.

Here, parameters that can be set for the stabilization process are highly diverse, and it is difficult to list all specific parameters.

Examples of parameters that can be set for the stabilization process include parameters related to timing adjustment of IMU data and various types of filtering process. In addition, examples thereof include also parameters related to the processes performed by the projective transformation section 43, the rotating section 44, and the projecting section 45 described before and the like. In addition, in a case where the free curvature perspective projection described before is performed in the projection process at the projecting section 45, examples thereof include also parameters related to the free curvature perspective projection.

By changing combinations of parameters likes the ones illustrated as an example in the description above, changes in image characteristics of stabilized images as horizontality, vibration, smoothness, target object, camera center, and the like described above arise.

Accordingly, by testing various parameter sets, it becomes possible to derive, as an optimum parameter set, a parameter set that satisfies designated image characteristics conditions.

In Fig. 12, the parameter deriving section F23 has a stabilization processing section F25, a trial control section F26, an image evaluating section F27, and an optimum parameter determining section F28.

Similarly to the stabilization processing section 15, the stabilization processing section F25 performs the stabilization process on input images on the basis of IMU data. Using estimation input images stored on the storage section 29 as input images, the stabilization processing section F25 performs the stabilization process on the basis of IMU data similarly stored on the storage section 29 (IMU data synchronized with the exposure timings of the estimation input images).

The trial control section F26 controls the stabilization process performed by the stabilization processing section F25. Specifically, the trial control section F26 performs control to set, for the stabilization processing section F25, a parameter set selected from the trial parameter set group Ps stored on the storage section 29.

The image evaluating section F27 evaluates the image characteristics of post-stabilization images obtained by the stabilization processing section F25 relative to image characteristics conditions according to an instruction given from the user. Specifically, the image evaluating section F27 evaluates the image characteristics of post-stabilization images relative to values (target values) of the individual items, horizontality, vibration, smoothness, target object, and camera center, accepted by the target value accepting section F24.

Here, evaluation of horizontality is performed by calculating, as an evaluation value, the difference value between the horizontality according to an instruction given from the user and the horizontality of stabilized images. As has been explained earlier, horizontality means the angular difference between the horizontal line in images and the horizontal line direction of the images.

For example, the horizontality of stabilized images can be determined by extracting straight portions in the stabilized images using a Hough transform or the like from the images and calculating the angle of a dominant straight portion in the extracted straight portions (the angle relative to the horizontal line direction). At this time, in a case where horizontal objects are not present, for example, the horizontal direction is inferred from a vertical object such as buildings or utility poles.

The image evaluating section F27 calculates, as a horizontality evaluation value, the difference value between the thus-calculated horizontality of stabilized images and the horizontality according to an instruction given from the user.

In addition, evaluation of vibration is performed by calculating, as an evaluation value, the difference value between the level of vibration according to an instruction given from the user (removal level or vibration enhancement level) and the level of vibration in stabilized images.

Here, the level of vibration is represented by the magnitude or frequency of vibration (motion per unit time) of a subject in images. Accordingly, the vibration level can be evaluated by determining the difference value between the vibration level represented by the magnitude or frequency of vibration of a subject in the images and the vibration level according to an instruction given from the user.

The magnitude or frequency of vibration of a subject in stabilized images can be determined by performing an optical flow (Optical Flow) process on stabilized images obtained within a predetermined period.

On the basis of the thus-determined magnitude or frequency of vibration in stabilized images, the image evaluating section F27 calculates a vibration level as an indicator of vibration and calculates, as a vibration evaluation value, the difference value between the vibration level and the vibration level according to an instruction given from the user.

Evaluation of smoothness is performed by calculating, as an evaluation value, the difference values between the levels of smoothness on the acceleration side and deceleration side according to an instruction given from the user and the levels of smoothness on the acceleration side and deceleration side in stabilized images.

Here, the levels of smoothness on the acceleration side and deceleration side in stabilized images can be determined by performing an optical flow process on stabilized images obtained within a predetermined period.

The image evaluating section F27 determines the levels of smoothness on the acceleration side and deceleration side of stabilized images and determines the difference values between the levels of smoothness on the acceleration side and deceleration side of stabilized images and the levels of smoothness on the acceleration side and deceleration side according to an instruction given from the user, respectively. Then, the comprehensive value such as the average value or total value of the thus-determined difference values on the acceleration side and the deceleration side is calculated as a smoothness evaluation value.

Evaluation of target object is performed by calculating, as an evaluation value, the difference value between the proportion of the size of the area occupied by a target subject according to an instruction given from the user and the proportion of the size of the area occupied by the subject in stabilized images (the proportion of the size of the area occupied in the images).

Specifically, the image evaluating section F27 identifies the area of a target subject designated by the user by performing a subject classification process such as a semantic segmentation process on stabilized images and determines the proportion of the size of the area occupied by the target subject in the images. Then, the difference value between the thus-determined proportion of the size of the area and the proportion of the size of the area occupied by the target subject according to an instruction given from the user is calculated as a target object evaluation value.

Evaluation about camera center is performed by calculating, as an evaluation value, the difference value between a tolerated amount of deviation from the camera center according to an instruction given from the user and the amount of deviation caused between the camera center and the image frame center in stabilized images.

The camera center in stabilized images can be estimated by performing image analysis on stabilized images obtained within a predetermined period.

The image evaluating section F27 calculates the amount of deviation caused between the estimated camera center and the image frame center of evaluation-target stabilized images and calculates, as a camera center evaluation value, the difference value between the amount of deviation and a tolerated amount of deviation according to an instruction given from the user.

The optimum parameter determining section F28 determines a parameter set that is deemed to be optimum on the basis of the evaluation values calculated by the image evaluating section F27.

Specifically, the optimum parameter determining section F28 in the present example determines a parameter set that can satisfy image characteristics conditions according to an instruction given from the user on the basis of the horizontality evaluation value, the vibration evaluation value, the smoothness evaluation value, the target object evaluation value, and the camera center evaluation value described above.

Here, in the present example, trials of the stabilization process performed by the stabilization processing section F25 are performed with some or all of a predetermined plurality of parameter sets in parameter sets prepared as the trial parameter set group Ps.

Accordingly, the trial control section F26 repeatedly performs control to cause the stabilization processing section F25 to execute the stabilization process in a state where a certain parameter set is set and thereafter cause the stabilization processing section F25 to execute the stabilization process in a state where the next parameter set is set.

In addition, along with this, the image evaluating section F27 calculates the evaluation values described above for each one of a plurality of stabilized images for which the stabilization process has been performed in a state where each parameter set is set.

The optimum parameter determining section F28 in the present example determines a parameter set that is deemed to be optimum on the basis of the evaluation values of the plurality of parameter sets calculated by the image evaluating section F27 in this manner.

Since evaluation values of a plurality of items are obtained in the present example, the optimum parameter determining section F28 calculates a comprehensive evaluation value for comprehensively evaluating the plurality of items. Specifically, as a comprehensive evaluation value, the optimum parameter determining section F28 calculates a composite value (e.g. the average value or total value) of the horizontality evaluation value, the vibration evaluation value, the smoothness evaluation value, and the target object evaluation value excluding the camera center evaluation value.

Since the evaluation criterion of the camera center evaluation value is a tolerated amount of deviation from the camera center, the camera center evaluation value is used as a decision criterion separate from the comprehensive evaluation value described above.

That is, the optimum parameter determining section F28 basically determines, as an optimum parameter set, a parameter set whose comprehensive evaluation value described above is the smallest in the plurality of parameter sets, but excludes, from optimum-parameter-set determination targets based on such a comprehensive evaluation value, parameter sets whose camera center evaluation value is smaller than 0. Thereby, a further determination using the comprehensive evaluation value is performed on parameter sets satisfying a condition that the tolerated amount of deviation from the camera center is smaller than an amount of deviation according to an instruction given from the user; as a result, a parameter set satisfying all the image characteristics conditions designated on the acceptance screen Gs illustrated in Fig. 14 is determined as an optimum parameter set.

Here, the CPU 21 in the present example has the preview display processing section F30.

The preview display processing section F30 performs a process of causing the display section 27 to display a stabilized image that is obtained by performing the stabilization process using parameters derived by the parameter deriving section F23 (a parameter set determined by the optimum parameter determining section F28).

Here, a preview area Ap for performing preview display by the preview display processing section F30 is provided on the acceptance screen Gs as illustrated in Fig. 14.

In response to the determination of an optimum parameter set by the optimum parameter determining section F28, the preview display processing section F30 causes the stabilization processing section F25 to execute the stabilization process in a state where the determined parameter set is set and causes the preview area Ap to display a stabilized image obtained by the stabilization process.

Thereby, the user can check the content of a stabilized image that is obtained in a case where a parameter set derived by the parameter deriving section F23 in response to an operation of the execute button B1 explained earlier is set.

As illustrated in the figure, an apply button B3 and an Undo button B4 are disposed near the preview area Ap on the acceptance screen Gs.

The apply button B3 is a button for giving an instruction for applying the derived parameter set as a parameter set to be set for the stabilization processing section 15 of the image-capturing apparatus 1. The Undo button B4 is a button for giving an instruction for restoring the instruction content of the image characteristics conditions to the instruction content at the time of the previous operation of the execute button B1.

In Fig. 12, the parameter transmission processing section F29 performs a process of transmitting parameters derived by the parameter deriving section F23 to an image-capturing apparatus 1.

Specifically, the parameter transmission processing section F29 performs a process of transmitting, via the communicating section 30 to an image-capturing apparatus 1 that has transmitted stabilized images and IMU data, a parameter set determined by the optimum parameter determining section F28, in response to an operation of the apply button B3 on the acceptance screen Gs.

For clarity, the image-capturing apparatus 1 that has transmitted stabilized images and IMU data is an image-capturing apparatus 1 that has transmitted stabilized images from which estimation input images used for the derivation of the transmitted parameters have been estimated.

In the image-capturing apparatus 1, the setting processing section F12 illustrated in Fig. 11 performs a process setting, for the stabilization processing section 15, parameters derived on the side of the information processing apparatus 2. Specifically, the setting processing section F12 performs a process of setting, for the stabilization processing section 15, the parameter set transmitted by the parameter transmission processing section F29.

Thereby, in the image-capturing apparatus 1, the parameters of the stabilization processing section 15 are adjusted to parameters that are deemed to be optimum.

### <3. Processing Procedure>

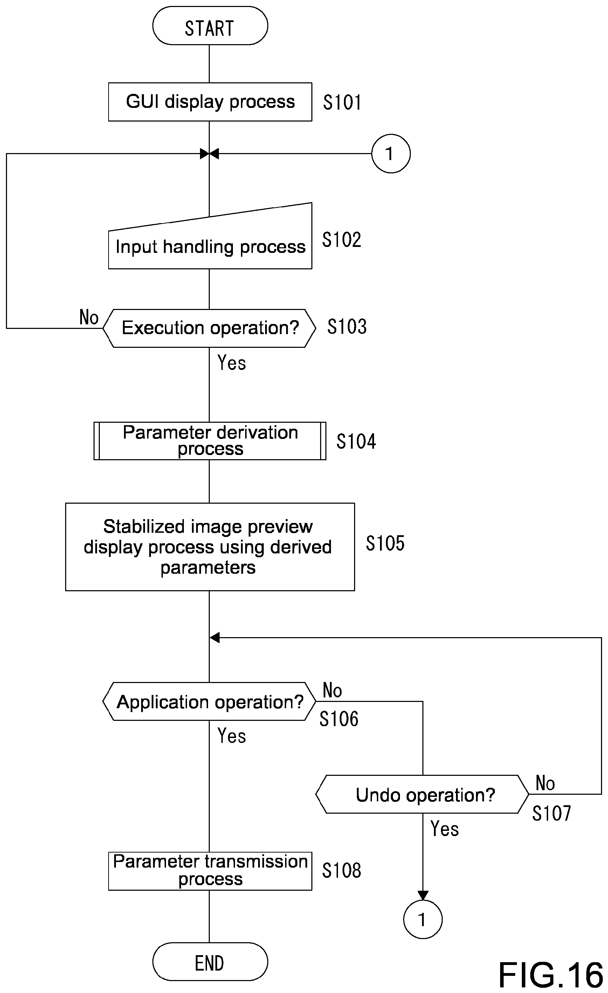

With reference to a flowchart in Fig. 16, an example of a processing procedure performed by the information processing apparatus 2 for enabling the parameter adjustment technique as the embodiment explained in the description above is explained.

The process illustrated in Fig. 16 is executed by the CPU 21 in the information processing apparatus 2 on the basis of, for example, a program stored on a storage apparatus such as the ROM 22 or the storage section 29.

In Fig. 16, the CPU 21 executes a GUI display process at Step S101. That is,a process of causing the display section 27 to display the acceptance screen Gs illustrated as an example in Fig. 14 is performed.

The CPU 21 executes an input handling process at Step S102 following Step S101, and determines at Step S103 following it whether or not an execution operation has been performed. The determination process at Step S103 is a process of determining whether or not the execute button B1 on the acceptance screen Gs has been operated.

In a case where it is determined at Step S103 that an execution operation has not been performed, the CPU 21 performs the input handling process at Step S102. In the input handling process at Step S102, a process according to an input operation on the acceptance screen Gs such as updating the display content of the acceptance screen Gs in accordance with various types of operation element (operation elements Sh and Sv, etc.) on the screen is performed.

In a case where it is determined at Step S103 that an execution operation has been performed, the CPU 21 proceeds to Step S104 and performs the parameter derivation process.

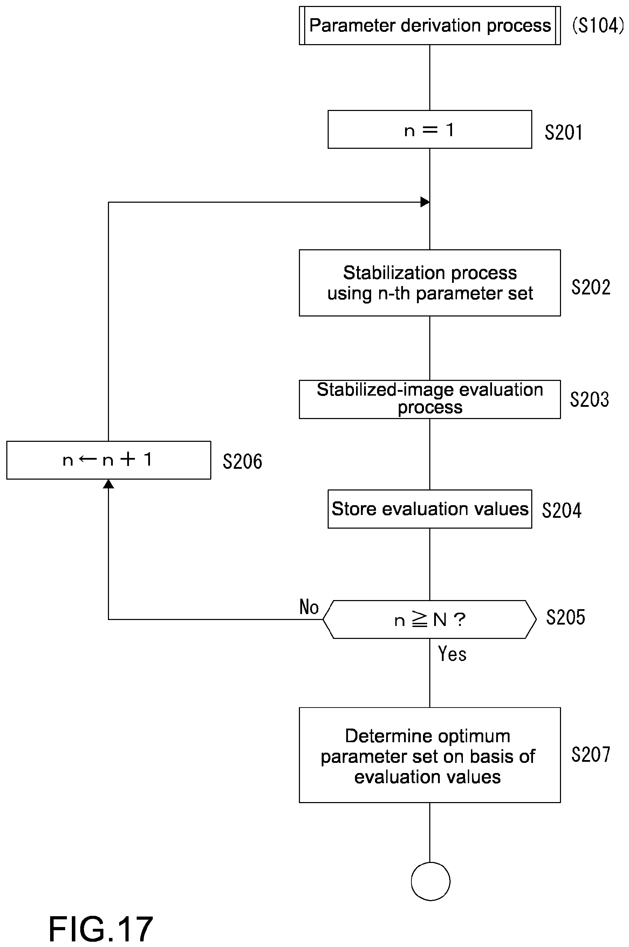

Fig. 17 is a flowchart illustrating details of the parameter derivation process at Step S104.

In the parameter derivation process at Step S104, first, the CPU 21 performs a process of setting a set identifier n to 1 at Step S201. The set identifier n is an identifier for identifying a parameter set to be used for a process in parameter sets in the trial parameter set group Ps.

At Step S202 following Step S201, the CPU 21 executes the stabilization process using the n-th parameter set. That is, the n-th parameter set is acquired from the trial parameter set group Ps, and the stabilization process on estimation input images stored on the storage section 29 is performed in a state where the parameter set is set. Here, in the present example, since image characteristics evaluation for the parameter set is performed using stabilized images obtained within a predetermined period, at Step S202, the CPU 21 performs the stabilization process on each of estimation input images obtained within the predetermined period (i.e. estimation input images corresponding to a plurality of frames). At this time, it goes without saying that IMU data synchronized with the processing-target estimation input images is used.

At Step S203 following Step S202, the CPU 21 performs a stabilized-image evaluation process. That is, as explained as a process performed by the image evaluating section F27 earlier, an evaluation process related to image characteristics of the stabilized images, specifically, in the present example, a process of calculating the comprehensive evaluation value of the horizontality evaluation value, the vibration evaluation value, the smoothness evaluation value, and the target object evaluation value and calculating the camera center evaluation value, is performed.

At Step S204 following Step S203, the CPU 21 performs a process of storing the evaluation values, that is, a process of causing a predetermined storage apparatus such as the storage section 29 or the RAM 23 to store the evaluation values calculated at Step S203.

At Step S205 following Step S204, the CPU 21 determines whether or not the set identifier n is equal to or greater than a predetermined value N (N is a natural number which is at least two or greater). Here, it is conceivable to set the predetermined value N to the total number of parameter sets prepared as the trial parameter set group Ps or to a predetermined number smaller than the total number.

In a case where it is determined at Step S205 that the set identifier n is not equal to or greater than the predetermined value N, the CPU 21 proceeds to Step S206, increments the set identifier n, and returns to Step S202.

Thereby, evaluation on the next parameter set is performed.

In a case where it is determined at Step S205 that the set identifier n is equal to or greater than the predetermined value N, the CPU 21 proceeds to Step S207 and performs a process of determining an optimum parameter set on the basis of the evaluation values. In the present example, a parameter set that is deemed to be optimum is determined on the basis of the comprehensive evaluation value and the camera center evaluation value of each parameter set stored through the process at Step S204. Specifically, the CPU 21 performs a process of excluding parameter sets whose camera center evaluation value is smaller than 0 from trialed parameter sets and determining, as an optimum parameter set and from the remaining parameter sets, an optimum parameter set based on the comprehensive evaluation value, that is, determining a parameter set whose comprehensive evaluation value is the smallest in the present example.

Note that, in a case where there is a plurality of parameter sets whose comprehensive evaluation value is the smallest, one optimum parameter set is determined in accordance with a predetermined priority. For example, it is conceivable that the priority in this case is a priority based on the camera center evaluation value. Alternatively, it is conceivable also to not make the selection based on a priority, but allow a user to make the selection as desired.

In Fig. 16, in response to the execution of the parameter derivation process at Step S104 explained in the described above, at Step S105, the CPU 21 performs a stabilized image preview display process using the derived parameters. That is, the stabilization process is executed in a state where the parameter set derived at Step S104 is set, and a process of causing the display section 27, specifically the preview area Ap on the acceptance screen Gs in the present example, to display a stabilized image obtained through the stabilization process is performed.

In response to the execution of the preview display process at Step S105, as processes at Step S106 or S107, the CPU 21 waits for either of an application operation or an Undo operation. That is, either of an operation on the apply button B3 or an operation of the Undo button B4 is waited for.

In a case where it is determined at Step S107 that an Undo operation has been performed, the CPU 21 returns to Step S102. Note that, although an illustration is omitted, in a case where it is determined at Step S107 that an Undo operation has been performed, the CPU 21 proceeds to Step S102 after performing a process of restoring the instruction values of the individual items such as horizontality on the acceptance screen Gs to values to which the instruction value have been set at the time of the previous operation of the execute button B1.

On the other hand, in a case where it is determined at Step S106 that an application operation has been performed, the CPU 21 proceeds to Step S108 and executes a parameter transmission process. That is, a process of transmitting, via the communicating section 30, the parameter set derived at Step S104 to an image-capturing apparatus 1 that has transmitted the stabilized images and the IMU data is performed.

As described before, in the image-capturing apparatus 1, a process of setting the thus-transmitted parameter set for the stabilization processing section 15 is performed. Thereby, the parameters in the stabilization processing section 15 are adjusted to the parameters that are deemed to be optimum.

Note that whereas, in the example explained in the description above, image characteristics are evaluated about a predetermined plurality of predetermined parameters, and parameters are derived on the basis of a result of the evaluation, the technique of parameter derivation is not limited to the technique.

For example, it is conceivable to adopt a technique in which evaluation of image characteristics is performed every time one parameter is tested, and, if a result of the evaluation satisfies a predetermined criterion, the parameter is determined as a parameter that is deemed to be optimum. Such a technique makes it possible to aim to reduce the number of times of the stabilization process and the evaluation process for parameter derivation.

In addition, whereas, in the description above, regarding parameter derivation for the stabilization processing section 15, parameters that are to be set for the stabilization processing section 15 of one image-capturing apparatus 1 are derived on the basis of stabilized images and IMU data from the image-capturing apparatus 1, it is conceivable also that stabilized images and IMU data are transmitted to the information processing apparatus 2 from a plurality of image-capturing apparatuses 1, and the parameter deriving section F23 derives parameters that are to be set for the stabilization processing section 15 for each image-capturing apparatus 1 on the basis of pre-processing images (estimation input images) estimated for the image-capturing apparatus 1 by the inverse stabilization processing section F22.

Thereby, even in a case where differences arise in image characteristics of processed images (stabilized images) between the image-capturing apparatuses 1 due to differences in use environment, it becomes possible to derive appropriate parameters for each image-capturing apparatus 1.

Accordingly, it is possible to aim to enable appropriate parameter adjustment according to the use environment of each image-capturing apparatus 1.

Particularly, when applied to a car or motorcycle race scene, parameters that are deemed to be optimum differ undesirably depending on the course, car settings, the manner of driving by a player, and the like. Because of this, it is suitable to derive parameters that are deemed to be optimum for each image-capturing apparatus 1 as described above.

### <4. Modification Example>

Whereas an embodiment has been explained thus far, the present technology is not limited to specific examples explained up to this point, but can adopt a variety of configurations as modification examples.

For example, whereas the description above illustrates a car or a motorcycle as examples of a mobile body M to which an image-capturing apparatus 1 is attached, the type of mobile bodies M is not particularly limited. For example, a mobile body M may be a human, an animal, or the like. As an example, it is conceivable to attach an image-capturing apparatus 1 to a player or a referee in a sport. In a case where an image-capturing apparatus 1 is attached to a player, since it is conceivable that optimum parameters differ depending on motion characteristics of the mobile body M according to the type of sport, it is suitable to perform parameter adjustment according to the present technology. In addition, since there can be differences in motion characteristics also between players and referees, it is effective to perform parameter adjustment for each of players and referees. Furthermore, since optimum parameters can differ depending also on a part such as, for example, head or chest to which an image-capturing apparatus 1 is attached, it is also effective to perform parameter adjustment for each attachment part.

In addition, it is also not essential to attach an image-capturing apparatus 1 to a mobile body M.

For example, it is conceivable also that an image-capturing apparatus 1 is attached as a stationary monitoring camera to some fixed object. Even in this case, there is a possibility that vibration of the image-capturing apparatus 1 is intensified by wind or the like if the image-capturing apparatus 1 is disposed outdoors, and vibration of the image-capturing apparatus 1 is intensified even if the image-capturing apparatus 1 is disposed indoors due to earthquake or the like; therefore, it is conceivable to perform the stabilization process.

In addition, whereas the description above illustrates the stabilization process as an example of image processing based on motion detection information, the image processing according to the present technology is not limited to the stabilization process.

For example, in the fields of VR (Virtual Reality) or AR (Augmented Reality), in a case where adjustment is made to the viewpoint of an image to be presented to the wearer of an HMD (Head Mounted Display) on the basis of motion detection information about the HMD by, for example, a technology of free curvature perspective projection described before or the like, the viewpoint adjustment process can be equivalent to the image processing according to the present technology.

In the case of VR, target images of image processing are not captured images, but CG (Computer Generated) images, in some cases. As can be understood from this also, image processing apparatuses according to the present technology are not limited to image-capturing apparatuses having an image-capturing section, but can widely include apparatuses that perform image processing based on motion detection information on images such as CG images other than captured images.

In addition, whereas the description above illustrates an example in which a plurality of parameter sets prepared in advance is tested sequentially in trials of the stabilization process for parameter derivation, individual parameters may be individually adjustable. At this time, it is conceivable also that certain parameters are fixed, and only particular parameters are adjusted.

In addition, it conceivable also that parameter sets to be trialed in parameter derivation are selected on the basis of image characteristics conditions designated by the user.

In addition, whereas the description above illustrates, as an example of a technique for causing an image processing apparatus to acquire derived parameters, a technique in which the information processing apparatus having performed parameter derivation transmits derived parameters to an image processing apparatus, another technique also is conceivable as a technique in which an image processing apparatus is caused to acquire derived parameters.

For example, a technique in which the information processing apparatus having performed parameter derivation transmits derived parameters to a second apparatus, and the second apparatus transmits the derived parameters to an image processing apparatus is conceivable.

Alternatively, it is conceivable also to cause an image processing apparatus to acquire derived parameters via a removable recording medium such as a USB (Universal Serial Bus) memory.

### <5. Summary of Embodiment>

As described above, an information processing apparatus (2) as an embodiment includes an inverse processing section (inverse stabilization processing section F22) that estimates a pre-processing image on the basis of a processed image and motion detection information that are transmitted by an image processing apparatus (image-capturing apparatus 1) including a motion detecting section that detects a motion of the image processing apparatus, and an image processing section that performs, on a processing-target image, image processing based on the motion detection information, the motion detection information being acquired by the motion detecting section, the processed image being the processing-target image after the image processing performed by the image processing section, the pre-processing image being the processing-target image before the image processing; and a parameter deriving section (F23) that derives a parameter that is to be set for the image processing section on the basis of a result of a trial of the image processing performed, using a candidate parameter, on the pre-processing image estimated by the inverse processing section.

By adopting the technique in which the pre-processing image estimated from a processed image is used for parameter derivation as described above, it becomes unnecessary to cause the information processing apparatus to acquire the pre-processing image from the image processing apparatus in performing parameter derivation.

Accordingly, it becomes possible for the information processing apparatus to appropriately perform parameter derivation, and it is possible to aim to enable appropriate parameter adjustment for image processing in the image processing apparatus even in a case where the information processing apparatus that performs parameter derivation is not able to acquire the pre-processing image from the image processing apparatus.

In addition, in the information processing apparatus as the embodiment, the image processing apparatus is an image-capturing apparatus having an image-capturing section (image sensor 12), and, as the image processing, the image processing section performs a stabilization process on an image captured with the image-capturing section.

Thereby, it becomes possible for the information processing apparatus to appropriately perform parameter derivation, and it is possible to aim to enable appropriate parameter adjustment for the stabilization process in the image-capturing apparatus even in a case where the information processing apparatus that performs parameter derivation is not able to acquire a stabilization-process pre-processing image from the image-capturing apparatus.

Furthermore, in the information processing apparatus as the embodiment, the image-capturing apparatuses each transmit the processed image and the motion detection information to the information processing apparatus, and the parameter deriving section derives a parameter that is to be set for the image processing section for each of the image-capturing apparatuses on the basis of the pre-processing image estimated by the inverse processing section for the image-capturing apparatus.

Thereby, even in a case where differences arise in image characteristics of processed images (stabilized images) between the image-capturing apparatuses due to differences in use environment, it becomes possible to derive appropriate parameters for each of the image-capturing apparatuses.

Accordingly, it is possible to aim to enable appropriate parameter adjustment according to the use environment of each of the image-capturing apparatuses.

Still furthermore, in the information processing apparatus as the embodiment, the parameter deriving section derives a parameter that satisfies an image characteristics condition for the processed image, the image characteristics condition being given as an instruction through a user operation.

Thereby, in the parameter adjustment performed by the image processing section, it is sufficient if a user only performs an operation of designating the image characteristics condition for the processed image and it becomes unnecessary for the user to devise a combination of parameters that is to be set at the time of a trial or perform a task of performing an parameter designation operation.

Accordingly, it is possible to aim to reduce the burden of a task performed by the user in parameter adjustment. In addition, since the only required operation is an instruction operation for image characteristics conditions, it is also possible to aim to shorten the time required for parameter derivation by shortening the time required for an operation.

Furthermore, it is possible to enable even a user who is not familiar with parameters of image processing to perform appropriate parameter derivation.

In addition, the information processing apparatus as the embodiment includes an operation accepting section (target value accepting section F24) that accepts an instruction operation for the image characteristics condition by causing a display section to display thereon a GUI for performing the instruction operation for the image characteristics condition.

By accepting the instruction operation for image characteristics conditions through the GUI, it becomes possible to cause the user to perform the instruction operation while presenting visual information for assisting the instruction operation for image characteristics conditions to the user, and it becomes possible to allow the user to intuitively perform the instruction operation.

Accordingly, it is possible to aim to make the instruction operation for image characteristics conditions easier to perform, and it is possible to aim to reduce the burden on the user in performing an operation related to the instruction for the image characteristics conditions.

Furthermore, in the information processing apparatus as the embodiment, the image processing apparatus is an image-capturing apparatus having an image-capturing section, and the image processing is a stabilization process on an image captured with the image-capturing section.

Thereby, it is possible to perform the parameter adjustment for the image processing section such that characteristics intended by the user are obtained, about image characteristics that can be achieved through the stabilization process.

Still furthermore, in the information processing apparatus as the embodiment, the image characteristics condition is a condition related to horizontality.

Thereby, it is possible to perform the parameter adjustment for the image processing section such that the horizontality of the processed image becomes horizontality intended by the user.

In addition, in the information processing apparatus as the embodiment, the image characteristics condition is a condition related to vibration.

Thereby, it is possible to perform the parameter adjustment for the image processing section such that the mode of vibration of the processed image becomes a mode intended by the user.

Furthermore, in the information processing apparatus as the embodiment, the image characteristics condition is a condition related to a size of an area occupied by a target subject within an image.

Thereby, it is possible to perform the parameter adjustment for the image processing section such that the size of the area occupied by the target subject within the processed image becomes an area size intended by the user.

Still furthermore, in the information processing apparatus as the embodiment, the image characteristics condition is a condition related to a deviation caused between an image-capturing center and an image frame center.

In the stabilized image, a deviation caused between the image-capturing center and the image frame center arises in some cases due to the influence of acceleration that is applied to an image-capturing apparatus or the like. According to the configuration described above, for example, it is possible to perform the parameter adjustment for the image processing section such that the mode of a deviation caused between the image-capturing center and the image frame center becomes the mode intended by the user such as preventing the amount of deviation caused between the image-capturing center and the image frame center from exceeding a predetermined tolerated amount of deviation.

In addition, the information processing apparatus as the embodiment includes a preview display processing section (F30) that performs a process of causing a display section to display thereon a processed image obtained by performing the image processing using the parameter derived by the parameter deriving section.

Thereby, it becomes possible for the user to use the processed image obtained when the derived parameter is set to check whether or not the image characteristics condition intended by her/himself is satisfied, and it is possible to aim to enhance the ease of checking whether or not a desired parameter has been derived.

Furthermore, in the information processing apparatus as the embodiment, the preview display processing section causes the display section to display thereon the processed image, the display section being the same as a display section on which a GUI for performing the instruction operation for the image characteristics condition is displayed (see Fig. 14).

By performing preview display of the processed image on the display section on which the GUI for performing the instruction operation for image characteristics conditions is displayed, it is possible to aim to make an image characteristics condition changing operation easier to perform in a case where, as a result of checking of a preview image by the user, the user desires to redo parameter derivation with a changed image characteristics condition for which the user gives an instruction, and it is possible to aim to enhance convenience.

A parameter derivation method as an embodiment is a parameter derivation method performed by an information processing apparatus, the parameter derivation method including estimating a pre-processing image on the basis of a processed image and motion detection information that are transmitted by an image processing apparatus including a motion detecting section that detects a motion of the image processing apparatus, and an image processing section that performs, on a processing-target image, image processing based on the motion detection information, the motion detection information being acquired by the motion detecting section, the processed image being the processing-target image after the image processing performed by the image processing section, the pre-processing image being the processing-target image before the image processing; and deriving a parameter that is to be set for the image processing section on the basis of a result of a trial of the image processing performed on the estimated pre-processing image using a candidate parameter.

By such a parameter derivation method also, effects and advantages similar to those of the information processing apparatus as the embodiment described above can be achieved.

An image processing apparatus as an embodiment includes a motion detecting section (IMU 14) that detects a motion of the image processing apparatus; an image processing section (stabilization processing section 15) that performs, on a processing-target image, image processing based on motion detection information acquired by the motion detecting section; a transmission processing section (camera-side transmission processing section F11) that performs a process of transmitting, to an external apparatus, the motion detection information and a processed image that is the processing-target image after the image processing performed by the image processing section; and a setting processing section (F12) that performs a process of setting, for the image processing section, a parameter derived by the external apparatus on the basis of a result of a trial of the image processing performed, using a candidate parameter, on a pre-processing image that is the processing-target image before the image processing and that is estimated on the basis of the processed image and the motion detection information.

By performing the process of transmitting the processed image and the motion detection information to the external apparatus as described above, it becomes possible for an information processing apparatus as the external apparatus to adopt the technique in which the pre-processing image estimated from the processed image is used for parameter derivation, and it becomes unnecessary to cause the information processing apparatus to acquire the pre-processing image from the image processing apparatus in performing parameter derivation. In addition, the setting processing section described above makes it possible for the image processing apparatus to perform the image processing using the derived parameter.

Accordingly, it is possible to aim to perform appropriate parameter adjustment for image processing in the image processing apparatus even in a case where the information processing apparatus that performs parameter derivation is not able to acquire the pre-processing image from the image processing apparatus.

A parameter setting method as an embodiment is a parameter setting method performed at an image processing apparatus including a motion detecting section that detects a motion of the image processing apparatus, and an image processing section that performs, on a processing-target image, image processing based on motion detection information acquired by the motion detecting section, the parameter setting method including transmitting, to an external apparatus, the motion detection information and a processed image that is the processing-target image after the image processing performed by the image processing section; and setting, for the image processing section, a parameter derived by the external apparatus on the basis of a result of a trial of the image processing performed, using a candidate parameter, on a pre-processing image that is the processing-target image before the image processing and that is estimated on the basis of the processed image and the motion detection information.

By such a parameter setting method also, effects and advantages similar to those of the image processing apparatus as the embodiment described above can be achieved.

Note that advantages described in the present specification are merely illustrated as examples, advantages of the present disclosure are not limited to them, and there may be other advantages.

### <6. Present Technology>

Note that the present technology can also adopt the following configurations.
(1) An information processing apparatus including:
   an inverse processing section that estimates a pre-processing image on the basis of a processed image and motion detection information that are transmitted by an image processing apparatus including a motion detecting section that detects a motion of the image processing apparatus, and an image processing section that performs, on a processing-target image, image processing based on the motion detection information, the motion detection information being acquired by the motion detecting section, the processed image being the processing-target image after the image processing performed by the image processing section, the pre-processing image being the processing-target image before the image processing; and
   a parameter deriving section that derives a parameter that is to be set for the image processing section on the basis of a result of a trial of the image processing performed, using a candidate parameter, on the pre-processing image estimated by the inverse processing section.
(2) The information processing apparatus according to (1), in which
   the image processing apparatus is an image-capturing apparatus having an image-capturing section, and
   as the image processing, the image processing section performs a stabilization process on an image captured with the image-capturing section.
(3) The information processing apparatus according to (2), in which
   the image-capturing apparatuses each transmit the processed image and the motion detection information to the information processing apparatus, and
   the parameter deriving section derives a parameter that is to be set for the image processing section for each of the image-capturing apparatuses on the basis of the pre-processing image estimated by the inverse processing section for the image-capturing apparatus.
(4) The information processing apparatus according to any one of (1) to (3), in which
   the parameter deriving section derives a parameter that satisfies an image characteristics condition for the processed image, the image characteristics condition being given as an instruction through a user operation.
(5) The information processing apparatus according to (4), further including
   an operation accepting section that accepts an instruction operation for the image characteristics condition by causing a display section to display thereon a GUI for performing the instruction operation for the image characteristics condition.
(6) The information processing apparatus according to (4) or (5), in which
   the image processing apparatus is an image-capturing apparatus having an image-capturing section, and
   the image processing is a stabilization process on an image captured with the image-capturing section.
(7) The information processing apparatus according to (6), in which
   the image characteristics condition is a condition related to horizontality.
(8) The information processing apparatus according to (6), in which
   the image characteristics condition is a condition related to vibration.
(9) The information processing apparatus according to (6), in which
   the image characteristics condition is a condition related to a size of an area occupied by a target subject within an image.
(10) The information processing apparatus according to (6), in which
   the image characteristics condition is a condition related to a deviation caused between an image-capturing center and an image frame center.
(11) The information processing apparatus according to any one of (4) to (10), further including
   a preview display processing section that performs a process of causing a display section to display thereon a processed image obtained by performing the image processing using the parameter derived by the parameter deriving section.
(12) The information processing apparatus according to (11), in which
   the preview display processing section causes the display section to display thereon the processed image, the display section being the same as a display section on which a GUI for performing the instruction operation for the image characteristics condition is displayed.
(13) A parameter derivation method performed by an information processing apparatus, the parameter derivation method including:
   estimating a pre-processing image on the basis of a processed image and motion detection information that are transmitted by an image processing apparatus including a motion detecting section that detects a motion of the image processing apparatus, and an image processing section that performs, on a processing-target image, image processing based on the motion detection information, the motion detection information being acquired by the motion detecting section, the processed image being the processing-target image after the image processing performed by the image processing section, the pre-processing image being the processing-target image before the image processing; and
   deriving a parameter that is to be set for the image processing section on the basis of a result of a trial of the image processing performed on the estimated pre-processing image using a candidate parameter.
(14) An image processing apparatus including:
   a motion detecting section that detects a motion of the image processing apparatus;
   an image processing section that performs, on a processing-target image, image processing based on motion detection information acquired by the motion detecting section;
   a transmission processing section that performs a process of transmitting, to an external apparatus, the motion detection information and a processed image that is the processing-target image after the image processing performed by the image processing section; and
   a setting processing section that performs a process of setting, for the image processing section, a parameter derived by the external apparatus on the basis of a result of a trial of the image processing performed, using a candidate parameter, on a pre-processing image that is the processing-target image before the image processing and that is estimated on the basis of the processed image and the motion detection information.
(15) A parameter setting method performed at an image processing apparatus including a motion detecting section that detects a motion of the image processing apparatus, and an image processing section that performs, on a processing-target image, image processing based on motion detection information acquired by the motion detecting section, the parameter setting method including:
   transmitting, to an external apparatus, the motion detection information and a processed image that is the processing-target image after the image processing performed by the image processing section; and
   setting, for the image processing section, a parameter derived by the external apparatus on the basis of a result of a trial of the image processing performed, using a candidate parameter, on a pre-processing image that is the processing-target image before the image processing and that is estimated on the basis of the processed image and the motion detection information.

### Reference Signs List

- 1: image-capturing apparatus
- 2: information processing apparatus
- 12: image sensor
- 13: image-signal processing section
- 14: IMU
- 15: stabilization processing section
- 16: camera control section
- 17: communicating section
- 21: CPU
- 22: ROM
- 23: RAM
- 26: input section
- 27: display section
- 29: storage section
- 30: communicating section
- q0 to q3: quaternion data
- Du, Dv: difference vector
- Pr: reference pixel
- Ar: reference area
- 40: memory section
- 41: grid point mesh generating section
- 42: sampling section
- 43: projective transformation section
- 44: rotating section
- 45: projecting section
- 46: segment searching section
- 47: remesh data generating section
- 48: rendering section
- F11: camera-side transmission processing section
- F12: setting processing section
- F21: data separating section
- F22: inverse stabilization processing section
- F23: parameter deriving section
- F24: target value accepting section
- F25: stabilization processing section
- F26: trial control section
- F27: image evaluating section
- F28: optimum parameter determining section
- F29: parameter transmission processing section
- F30: preview display processing section
- Ps: trial parameter set group
- 50: inverse stabilization image generating section
- Gs: acceptance screen
- B1: execute button
- B2: clear button
- B3: apply button
- B4: Undo button
- Sh: operation element
- Sv: operation element
- Sn: operation element
- Ag: designation image display area
- Sd: operation element
- Su: operation element
- Sc: operation element
- Ap: preview area

## Claims

1. An information processing apparatus comprising:
an inverse processing section that estimates a pre-processing image on a basis of a processed image and motion detection information that are transmitted by an image processing apparatus including a motion detecting section that detects a motion of the image processing apparatus, and an image processing section that performs, on a processing-target image, image processing based on the motion detection information, the motion detection information being acquired by the motion detecting section, the processed image being the processing-target image after the image processing performed by the image processing section, the pre-processing image being the processing-target image before the image processing; and
a parameter deriving section that derives a parameter that is to be set for the image processing section on a basis of a result of a trial of the image processing performed, using a candidate parameter, on the pre-processing image estimated by the inverse processing section.

2. The information processing apparatus according to claim 1, wherein
the image processing apparatus is an image-capturing apparatus having an image-capturing section, and
as the image processing, the image processing section performs a stabilization process on an image captured with the image-capturing section.

3. The information processing apparatus according to claim 2, wherein
the image-capturing apparatuses each transmit the processed image and the motion detection information to the information processing apparatus, and
the parameter deriving section derives a parameter that is to be set for the image processing section for each of the image-capturing apparatuses on a basis of the pre-processing image estimated by the inverse processing section for the image-capturing apparatus.

4. The information processing apparatus according to claim 1, wherein
the parameter deriving section derives a parameter that satisfies an image characteristics condition for the processed image, the image characteristics condition being given as an instruction through a user operation.

5. The information processing apparatus according to claim 4, further comprising
an operation accepting section that accepts an instruction operation for the image characteristics condition by causing a display section to display thereon a GUI for performing the instruction operation for the image characteristics condition.

6. The information processing apparatus according to claim 4, wherein
the image processing apparatus is an image-capturing apparatus having an image-capturing section, and
the image processing is a stabilization process on an image captured with the image-capturing section.

7. The information processing apparatus according to claim 6, wherein
the image characteristics condition is a condition related to horizontality.

8. The information processing apparatus according to claim 6, wherein
the image characteristics condition is a condition related to vibration.

9. The information processing apparatus according to claim 6, wherein
the image characteristics condition is a condition related to a size of an area occupied by a target subject within an image.

10. The information processing apparatus according to claim 6, wherein
the image characteristics condition is a condition related to a deviation caused between an image-capturing center and an image frame center.

11. The information processing apparatus according to claim 4, further comprising
a preview display processing section that performs a process of causing a display section to display thereon a processed image obtained by performing the image processing using the parameter derived by the parameter deriving section.

12. The information processing apparatus according to claim 11, wherein
the preview display processing section causes the display section to display thereon the processed image, the display section being the same as a display section on which a GUI for performing the instruction operation for the image characteristics condition is displayed.

13. A parameter derivation method performed by an information processing apparatus, the parameter derivation method comprising:
estimating a pre-processing image on a basis of a processed image and motion detection information that are transmitted by an image processing apparatus including a motion detecting section that detects a motion of the image processing apparatus, and an image processing section that performs, on a processing-target image, image processing based on the motion detection information, the motion detection information being acquired by the motion detecting section, the processed image being the processing-target image after the image processing performed by the image processing section, the pre-processing image being the processing-target image before the image processing; and
deriving a parameter that is to be set for the image processing section on a basis of a result of a trial of the image processing performed on the estimated pre-processing image using a candidate parameter.

14. An image processing apparatus comprising:
a motion detecting section that detects a motion of the image processing apparatus;
an image processing section that performs, on a processing-target image, image processing based on motion detection information acquired by the motion detecting section;
a transmission processing section that performs a process of transmitting, to an external apparatus, the motion detection information and a processed image that is the processing-target image after the image processing performed by the image processing section; and
a setting processing section that performs a process of setting, for the image processing section, a parameter derived by the external apparatus on a basis of a result of a trial of the image processing performed, using a candidate parameter, on a pre-processing image that is the processing-target image before the image processing and that is estimated on a basis of the processed image and the motion detection information.

15. A parameter setting method performed at an image processing apparatus including a motion detecting section that detects a motion of the image processing apparatus, and an image processing section that performs, on a processing-target image, image processing based on motion detection information acquired by the motion detecting section, the parameter setting method comprising:
transmitting, to an external apparatus, the motion detection information and a processed image that is the processing-target image after the image processing performed by the image processing section; and
setting, for the image processing section, a parameter derived by the external apparatus on a basis of a result of a trial of the image processing performed, using a candidate parameter, on a pre-processing image that is the processing-target image before the image processing and that is estimated on a basis of the processed image and the motion detection information.
